# EUROPEAN PATENT SPECIFICATION

(11) **EP 3 975 093 B1**
(45) Date of publication and mention of the grant of the patent: **25.09.2024**
(21) Application number: 21203048.0
(22) Date of filing: 17.08.2015
(51) Int. Cl.: G06Q 20/40, G06F 21/31, H04L 9/32, G06F 21/42, G06Q 20/42, H04L 9/40, G07F 19/00, G06Q 20/18

(54) **METHOD FOR DIGITAL AUTHENTICATION USING PUSH NOTIFICATIONS**
VERFAHREN ZUR DIGITALEN AUTHENTIFIZIERUNG MITTELS PUSH-BENACHRICHTIGUNGEN
PROCÉDÉ D'AUTHENTIFICATION NUMÉRIQUE UTILISANT DES NOTIFICATIONS PUSH

(30) Priority: 15.08.2014 US 201462037710 P
(43) Date of publication of application: 30.03.2022
(62) Divisional of application: 15832196.8
(73) Proprietor: Capital One Services, LLC, McLean, VA 22102 (US)
(72) Inventor: DOUGLAS, Lawrence, McLean, 22102 (US); ASHFIELD, James, Midlothian, 23113 (US); POOLE, Thomas S., Chantilly, 20151 (US); FIELDS, John, Henrico, 23233 (US); BOWERS, Justin, Richmond, 23294 (US); COGSWELL, Drew, Midlothian, 23113 (US); ELASIC, John, Wilmington, 19805 (US)
(74) Representative: Thoma, Michael

(56) References cited:
- US-A1- 2011 219 230
- US-A1- 2013 297 513

## Description

The present disclosure relates to methods for authenticating a customer without the transmission of sensitive data. The methods for authentication use digital authentication techniques only recently enabled by the introduction of mobile devices that offer immutable hardware identifiers, processors for encryption and location awareness as well as new interactions via touch, microphone, camera, and/or Bluetooth.

Current systems and methods for authenticating a customer include requesting sensitive data from the customer, such as an account number, a transaction card number, a social security number, a mother's maiden name, a password, and/or other personal data. Because certain information may be known by fraudsters, "something you know" authentication techniques force obscure questions such as "What is your grandfather's middle name?" Also, if customers forget the answers to certain questions such as "Who was your favorite teacher?" the customer could be locked out of its user experience after repeated failed attempts. The knowledge based authentication therefore is limited by the customer's ability to select, retain and reproduce responses. Also, current malware and phishing attacks can acquire anything that can be known, including two-factor authentication responses when transmitted via a network. And with increased travel and the nature of mobile devices, sensitive data may be requested via a telephone call in a public space thereby compromising the sensitive data when a customer responds orally via telephone. Current authentication processes therefore are not only burdensome for customers but also time-consuming and costly for companies providing customer service to these customers.

These and other drawbacks exist.

US 2011/219230 A1 discloses a financial service provider which implements a push authentication mechanism for use in the context of online banking and ATM withdrawals.

US 2013/297513 A1 discloses a push notification authentication mechanism which combines both user authentication and device authentication aspects.

A problem to be solved by the invention is to reduce time spent for a customer and reduce expenses paid for this by companies.

The problem is solved by a method according to claim 1.

Various embodiments of the present disclosure, together with further objects and advantages, may best be understood by reference to the following description taken in conjunction with the accompanying drawings, in the several Figures of which like reference numerals identify like elements, and in which:
- Figure 1: depicts a schematic diagram of a system for digital customer authentication, according to an example embodiment of the disclosure;
- Figure 2: depicts a schematic diagram of an example financial institution for use in a system for digital customer authentication, according to an example embodiment of the disclosure;
- Figure 3: depicts a flowchart illustrating and example method for generating communications with potential and current customers in order to optimize customer retention and/or engagement, according to an example embodiment of the disclosure;
- Figure 4: depicts an example system and method for authenticating customers, according to an example embodiment of the disclosure;
- Figure 5: depicts an example system and method for push authentication enrollment, according to an example embodiment of the disclosure;
- Figure 6: depicts an example system and method for push authentication, according to an example embodiment of the disclosure;
- Figure 7: depicts an example system and method for push authentication, according to an example embodiment of the disclosure;
- Figure 8: depicts an example system and example method for push authentication, according to an example embodiment of the disclosure;
- Figure 9: depicts an example system and example method for push authentication, according to an example embodiment of the disclosure;
- Figure 10: depicts an example system and example method for push authentication, according to an example embodiment of the disclosure; and
- Figure 11: depicts an example system and example method for push authentication, according to an example embodiment of the disclosure.

The following description is intended to convey a thorough understanding of the embodiments described by providing a number of specific exemplary embodiments and details involving systems and methods for digital customer authentication. It should be appreciated, however, that the present disclosure is not limited to these specific embodiments and details, which are exemplary only. It is further understood that one possessing ordinary skill in the art, in light of known systems and methods, would appreciate the use of the invention for its intended purposes and benefits in any number of alternative embodiments, depending on specific design and other needs. A financial institution and system supporting a financial institution are used as examples for the disclosure. The disclosure is not intended to be limited to financial institutions only.

Strong authentication is critical to quality customer service. Research suggests that customer authentication must be easy (e.g., provide security without forcing customers to work for it), fast (e.g., within 15-30 seconds end-to-end), and consistent and reliable in every channel (e.g., mobile, Internet, and the like). Also, effective authentication can include three factors associated with something the customers (1) know, (2) have and (3) are. The introduction the mobile devices that offer immutable hardware identifiers, processors for encryption and location awareness as well as new interactions via touch, microphone, camera, and/or Bluetooth support three factor authentication because the mobile device is something that customers have with them. Mobile devices also enable transmission of data about customers and data indicative of things customers know. Thus, the systems and methods for authentication described herein provide a novel digital authentication framework that utilizes digital authentication techniques enabled by the mobile devices.

As described herein, a customer can enroll to use the digital authentication techniques in a way that provided the appropriate authentication at the appropriate time. Accordingly, an authentication framework may be provided to match the risk of a customer activity to the appropriate authentication. For example, if a customer wishes to perform an activity that does not require authentication, such as viewing information other than non-public personal information (NPI), the authentication framework can utilize no authentication. If a customer wishes to perform an activity, such as viewing low-risk NPI, the authentication framework can utilize no challenge authentication. If a customer wishes to perform an activity, such as viewing medium-risk NPI and/or conducting low risk transactions, the authentication framework can utilize password, pattern recognition, facial recognition and/or push notification authentication.

Also, customers can use the digital authentication techniques described herein to enable strong authentication across multiple channels. These channels may include mobile devices, Internet or desktop based web-browsers, call centers, Automated Teller Machines (ATMs), bank branches, and the like. For entities that require customer authentication, the digital authentication techniques described herein, for example, reduce failures and friction which may lead to increased digital engagement; reduce interaction time for tellers and agents which may lead to significant cost savings; increase cross-channel security; and enable interactions through more channels. For customers who need to be authenticated, the digital authentication techniques described herein, for example, provide consistent authentication across multiple channels, reduce interaction time and reduce failures.

Entities that require customer authentication may require a customer to provide a response to an authentication request, such as a password, a PIN, an answer to a security question, and/or personal information. In instances where a customer is calling a company and needs to authenticate, these responses may be input and processed using Interactive Voice Response (IVR) systems and Automatic Call Distribution (ACD) systems.

IVR systems, ACD systems, voice portals and other telecommunications interaction and management systems are increasingly used to provide services for customers, employees and other users. An IVR system may be able to receive and recognize a caller request and/or selection using speech recognition and/or dual-tone multi-frequency signaling (DTMF). An IVR system may receive initial caller data without requiring a response from the caller, such as a caller line identifier (CLI) from the network used by the caller to access the IVR system. Moreover, an IVR system may be able to determine a prioritization or routing of a call based on the Dialed Number identification Service (DNIS), which determines the number dialed by the caller. An IVR system may also use a voice response unit (VRU) in order to execute either a pre-determined script or a script based on caller responses received using speech recognition or DTMF technologies. In addition, an IVR system may be implemented in a variety of settings, such as a voice caller setting, a video caller setting, and/or coordinated interactions using a telephone and a computer, such as Computer Telephony Integration (CTI) technology.

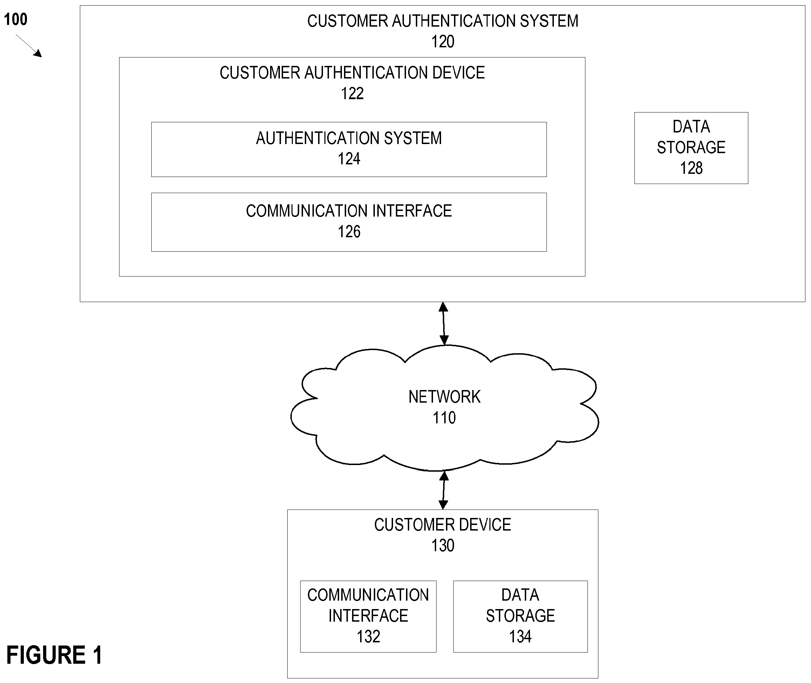

The example embodiments disclosed herein are directed to systems and methods for digital call center authentication. Though the example provided herein relates to digital call center authentication, one of skill in the art would appreciate that the digital authentication channel techniques described herein could be utilized in various customer interaction channels such as the various channels identified above. Figure 1 illustrates an example system for digital customer authentication 100. According to the various embodiments of the present disclosure, a system 100 for digital customer authentication may include a customer authentication system 120 and a caller device 130 connected over a network 110.

The network 110 may be one or more of a wireless network, a wired network, or any combination of a wireless network and a wired network. For example, network 110 may include one or more of a fiber optics network, a passive optical network, a cable network, an Internet network, a satellite network, a wireless LAN, a Global System for Mobile Communication (GSM), a Personal Communication Service (PCS), a Personal Area Networks, (PAN), D-AMPS, Wi-Fi, Fixed Wireless Data, IEEE 802.11b, 802.15.1, 802.11n, and 802.11g or any other wired or wireless network for transmitting and receiving a data signal.

In addition, network 110 may include, without limitation, telephone lines, fiber optics, IEEE Ethernet 902.3, a wide area network (WAN), a local area network (LAN) or a global network such as the Internet. Also, network 110 may support an Internet network, a wireless communication network, a cellular network, or the like, or any combination thereof. Network 110 may include one network, or any number of example types of networks mentioned above, operating as a stand-alone network or in cooperation with each other. Network 110 may utilize one or more protocols of one or more network elements to which they are communicatively couples. Network 110 may translate to or from other protocols to one or more protocols of network devices. Although network 110 is depicted as a single network, it should be appreciated that according to one or more embodiments, network 110 may comprise a plurality of interconnected networks, such as, for example, the Internet, a service provider's network, a cable television network, corporate networks, and home networks.

A customer authentication device 122 may access network 110 through one or more customer authentication systems 120 that may be communicatively coupled to the network 110. One or more customers may access the network 110 through one or more customer devices 130 that also may be communicatively coupled to the network 110.

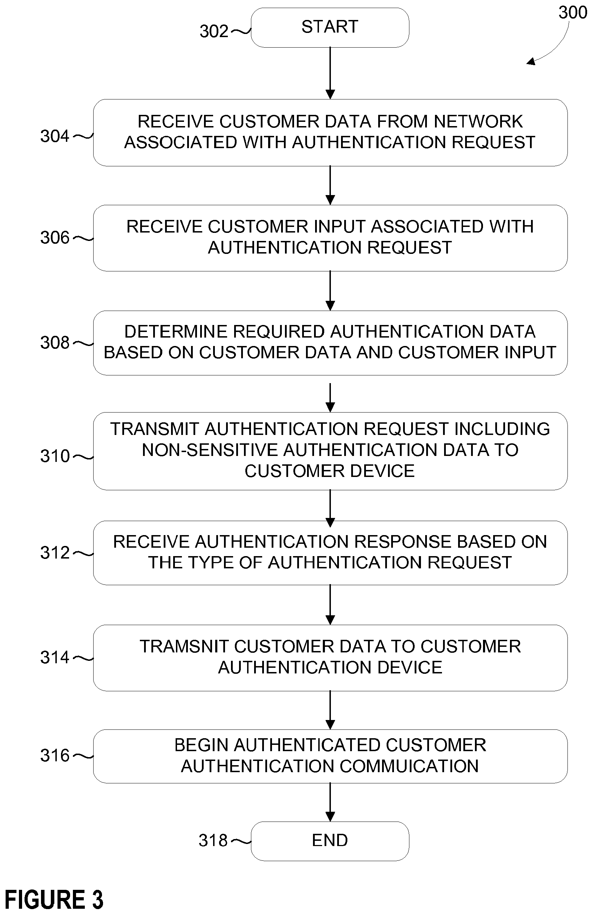

An example customer authentication system 120, customer authentication device 122, and/or customer device 130 may include one or more network-enabled computers to process instructions for digital customer authentication (e.g., digital customer authentication instructions as shown in Figures 3, 4, and 6). As referred to herein, a network-enabled computer may include, but is not limited to: e.g., any computer device, or communications device including, e.g., a server, a network appliance, a personal computer (PC), a workstation, a mobile device, a phone, a handheld PC, a personal digital assistant (PDA), a thin client, a fat client, an Internet browser, or other device. The one or more network-enabled computers of the example system 100 may execute one or more software applications for digital call center authentication.

An example customer authentication system 120, customer authentication device 122, and/or customer device 130 may include, for example, a processor, which may be several processors, a single processor, or a single device having multiple processors. A customer authentication system 120, customer authentication device 122, and/or customer device 130 may access and be communicatively coupled to the network 110. A customer authentication system 120, customer authentication device 122, and/or customer device 130 may store information in various electronic storage media, such as, for example, a database and/or other data storage (e.g., data storage 128, 136). Electronic information may be stored in a customer authentication system 120, customer authentication device 122, and/or customer device 130 in a format such as, for example, a flat file, an indexed file, a hierarchical database, a post-relational database, a relational database, such as a database created and maintained with software from, for example Oracle^{®} Corporation, Microsoft^{®} Excel file, Microsoft^{®} Access file, or any other storage mechanism.

An example customer authentication system 120, customer authentication device 122, and/or customer device 130 may send and receive data using one or more protocols. For example, data may be transmitted and received using Wireless Application Protocol (WAP), Multimedia Messaging Service (MMS), Enhanced Messaging Service (EMS), Short Message Service (SMS), Global System for Mobile Communications (GSM) based systems, Time Division Multiplexing (TDM) based systems, Code Division Multiples Access (CDMA) based systems suitable for transmitting and receiving data. Data may be transmitted and received wirelessly or may utilize cabled network connections or telecom connections, fiber connections, traditional phone wireline connection, a cable connection, or other wired network connection.

Each customer authentication system 120, customer authentication device 122, and/or customer device 130 of Figure 1 also may be equipped with physical media, such as, but not limited to, a compact disc (CD), a digital versatile disc (DVD), a floppy disk, a hard drive, read only memory (ROM), random access memory (RAM), as well as other physical media capable of storing software, or combinations thereof. Customer authentication system 120, customer authentication device 122, and/or customer device 130 may be able to perform the functions associated with methods for digital authentication 300, 400. Customer authentication system 120, customer authentication device 122, and/or customer device 130 may, for example, house the software for methods for digital authentication, obviating the need for a separate device on the network 110 to run the methods housed on a customer authentication system 120, customer authentication device 122, and/or customer device 130.

Furthermore, the information stored in a database may be available over the network 110, with the network containing data storage. A database maintained by customer authentication system 120, customer authentication device 122, and/or customer device 130 or the network 110, may store, or may connect to external data warehouses that store, for example, customer account data, customer privacy data, and/or customer authentication data.

A customer authentication system 120 may be, for example, a customer service center and/or a company, such as a financial institution (e.g., a bank, a credit card provider, or any other entity that offers financial accounts to customer), a travel company (e.g., an airline, a car rental company, a travel agency, or the like), an insurance company, a utility company (e.g., a water, gas, electric, television, internet, or other utility provider), a manufacturing company, and/or any other type of company where a customer may be required to authenticate and account or identity. The customer authentication system 120 may be, for example, part of the backend computing systems and associated servers of a customer service center and/or company.

Customer account data may include, for example, account number, customer name, date of birth, address, phone number(s), email address, payment data (e.g., financial account number used to make payments, financial institution address, phone number, website, and the like), transaction history, customer preferences, and the like. Customer preferences may include, for example, preferred method of contact, preferred method of transmitting authentication code, preferred travel destinations, airlines, hotel chains, car rental company, and the like, preferred time of day for a call or maintenance visit, preferred call center representative, preferred nickname, and other customer preferences. Customer privacy data may include, for example, customer social security number digits, mother's maiden name, account number, financial account data, a password, a PIN, customer privacy preferences, such as a method of transmission of a one-time authentication code (e.g., SMS, email, voicemail, and the like), biometric data, customer patterns and/or any other privacy data associated with the customer. Customer authentication data may include, for example, customer-specific authentication history (e.g., date and time of customer authentication, authentication attempt details, customer representative associated with authentication requests, and the like), customer service statistics (e.g., number of authentication-related issues per hour, number of authentication-related per representative, number of issues resolved, number of unresolved issues, and the like), customer authentication preferences (e.g., preferred method of transmitting an authentication code or notification, preferred method of authentication, and the like), and/or any authentication-related identifiers (e.g., customer service address, phone number(s), identification number, and the like).

An account may include, for example, a credit card account, a prepaid card account, stored value card account, debit card account, check card account, payroll card account, gift card account, prepaid credit card account, charge card account, checking account, rewards account, line of credit account, credit account, mobile device account, an account related to goods and/or services, or mobile commerce account. An account may or may not have an associated card, such as, for example, a credit card for a credit account or a debit card for a debit account. The account may enable payment using biometric authentication, or contactless based forms of authentication, such as QR codes or near-field communications. The account card may be associated or affiliated with one or more social networking sites, such as a co-branded credit card.

A customer authentications system 120 may include one or more customer authentication devices 122 and/or data storage 128. Although Figure 1 illustrates data storage as a separate component from the customer authentication device 122, data storage 128 may be incorporated within customer authentication device 122. A customer authentication device 122 may include data and/or modules, systems, and interfaces, including modules application programming interfaces to enable the generation, transmission, and processing of digital authentication data. As used herein, the term "module" may be understood to refer to computer executable software, firmware, hardware, or various combinations thereof. It is noted that the modules are exemplary. The modules may be combined, integrated, separated, or duplicated to support various applications. Also, a function described herein as being performed at a particular module, system, or interface may be performed at one or more other modules, systems, and interfaces and by one or more other devices instead of or in addition to the function performed at the particular module. Further, the modules, systems, and interfaces may be implemented across multiple devices or other components local or remote to one another. Additionally, the modules may be moved from one device and added to another device, or may be included in both devices.

Customer authentication device modules, systems, and interfaces may access data stored within the customer authentication device 122 and/or customer authentication system 120 and/or data stored external to a customer authentication system 120. For example, a customer authentication system 120 may be electronically connected to external data storage (e.g., a cloud (not shown)) that may provide data to a customer authentication system 120. Data stored and/or obtained by a customer authentication device 122 and/or customer authentication system 120 may include customer account data, customer privacy data, and/or customer authentication data. Customer authentication data, as described above, may be calculated based on data received from each authentication attempt and/or authentication-related issue (e.g., locked account, failed authentication attempt, and the like) received at customer authentication system 120 (e.g., whether the issue was resolved, whether the user was authenticated, and the like). Customer authentication data may also be received from third party systems (not shown), such as customer authentication rating and feedback data related to the customer authentication.

A customer authentication device 122 may include may include modules, systems, and interfaces to send and/or receive data for use in other modules, such as communication interface 126. A communication interface 126 may include various hardware and software components, such as, for example, a repeater, a microwave antenna, a cellular tower, or another network access device capable of providing connectivity between network mediums. The communication interface 126 may also contain various software and/or hardware components to enable communication over a network 110. For example, communication interface 126 may be capable of sending or receiving signals via network 110. Moreover, communication interface 126 may provide connectivity to one or more wired networks and may be capable of receiving signals on one medium such as a wired network and transmitting the received signals on a second medium such as a wireless network.

A customer authentication device 122 may include an authentication system 124 to generate and process authentication data associated with a customer. An authentication system 124 may generate authentication data based on a customer device, customer account data, customer privacy data, and/or customer authentication data.

Authentication data may include an alphanumeric code, a customer pattern, biometric data, a password, registered information (e.g., registered known devices), and the like. The details regarding a customer pattern are shown and described in U.S. Patent No. 9,053,476, issued on May 20, 2015, which claims priority to U.S. Provisional Patent Application No 61/787,625, filed on March 15, 2013; U.S. Patent Application No. 14/073,831, filed on May 4, 2015; and U.S. Patent Application No. 14/212,016, filed on March 14 2014, which claims priority to U.S. Provisional Patent Application No. 61/788,547, filed on March 15, 2013. Customer device data include information such as service provider, device make, device model, device number, device IP address, and/or service provider plan data. Customer device data may be determined using data stored in customer account data and/or data received from a third party, such as a customer service provider.

As an example, authentication data may be generated to include an alphanumeric code (e.g., a four-digit code, an-eight-digit code, and the like) and/or a user confirmation request. Authentication data may be generated in response to received data, such as data input on a user device and transmitted to a customer authentication device. The authentication data may be generated based on a phone number, account number, personal code (e.g., PIN and/or password), birthdate, and/or other user-input data. By way of example, authentication system 124 may receive the user-input data and generate an authentication code, such as a security token, a code generated by using a hash function, and the like. Authentication date may be generated by authentication module to expire within a predetermined amount of time, such as one minute, thirty second, and the like.

Authentication code data be generated based on geo-location data, such as a location associated with a customer device (e.g., customer device 130 or customer device 202). For example, if a customer is requesting authentication from a first device and the customer authentication system 120 determines that an authentication code should be transmitted to a second customer device based on data stored in data storage 128 (or from a third party), the customer authentication system 120 may determine a location of the first customer device and a location of the second customer device, for example when geo-location services are activated at the customer device(s). When the customer authentication system 120 determines that the first customer device is not within a predetermined distance (500 feet, one mile, and the like) from the second customer device, the customer authentication system 120 may determine than an authentication code cannot be generated.

Authentication data may be generated to be included with a notification, such as an SMS message, an MMS message, an e-mail, a push notification, a voicemail message, and the like. A notification may include data indicative of how to use the authentication code and/or data indicative of a customer authentication request. For example, where authentication data is transmitted in a push notification, the push notification may include a link to open a website, a mobile application, an authentication request notification, and/or an SMS message to input the authentication code and/or response. In the same manner, an SMS message, MMS message, e-mail, and the like may include a link to direct a customer to input the authentication data and/or authentication response for transmission to the customer authentication system 120 and/or customer authentication device 122.

Authentication data may be generated without being included in a notification. For example, a customer authentication device may transmit audio data indicative of the authentication code and/or instructions to log into an application or website to input the authentication code and/or an authentication response. The type of notification and length of code may be determined based on the customer account data, customer privacy data, and/or customer authentication system data.

A customer authentication system 120 may store information in various electronic storage media, such as data storage 128. Electronic information, files, and documents may be stored in various ways, including, for example, a flat file, indexed file, hierarchical database, relational database, such as a database created and maintained with software from, for example, Oracle^{®} Corporation, a Microsoft^{®} SQL system, an Amazon cloud hosted database or any other query-able structured data storage mechanism.

A customer device 130 may include for example, a network-enabled computer. In various example embodiments, customer device 130 may be associated with any individual or entity that desires to utilize digital authentication data in order to authenticate the customer. As referred to herein, a network-enabled computer may include, but is not limited to: e.g., any computer device, or communications device including, e.g., a server, a network appliance, a personal computer (PC), a workstation, a mobile device, a phone, a handheld PC, a personal digital assistant (PDA), a thin client, a fat client, an Internet browser, or other device. The one or more network-enabled computers of the example system 100 may execute one or more software applications to enable, for example, network communications.

Customer device 130 also may be a mobile device. For example, a mobile device may include an iPhone, iPod, iPad from Apple^{®} or any other mobile device running Apple's iOS operating system, any device running Google's Android^{®} operating system, including for example, Google's wearable device, Google Glass, any device running Microsoft's Windows^{®} Mobile operating system, and/or any other smartphone or like wearable mobile device. Customer device 130 also may include a handheld PC, a phone, a smartphone, a PDA, a tablet computer, or other device. Customer device 130 may include device-to-device communication abilities, such as, for example, RFID transmitters and receivers, cameras, scanners, and/or Near Field Communication (NFC) capabilities, which may allow for communication with other devices by touching them together or bringing them into close proximity. Exemplary NFC standards include ISO/IEC 18092:2004, which defines communication modes for Near Field Communication Interface and Protocol (NFCIP-1). For example, customer device 130 may be configured using the Isis Mobile Wallet^{™} system. Other exemplary NFC standards include those created by the NFC Forum.

Customer device 130 may include one or more software applications, such a mobile application associated with customer authentication system 120 and/or a company serviced by customer authentication system 120. For example, a software application may be a financial system mobile application.

Customer device 130 may include modules, systems and interfaces to send and/or receive data for use in other modules, such as communication interface 132. A communication interface 132 may include various hardware and software components, such as, for example, a repeater, a microwave antenna, a cellular tower, or another network access device capable of providing connectivity between network mediums. The communication interface 132 may also contain various software and/or hardware components to enable communication over a network 110. For example, communication interface 132 may be capable of sending or receiving signals via network 110. Moreover, communication interface 132 may provide connectivity to one or more wired networks and may be capable of receiving signals on one medium such as a wired network and transmitting the received signals on a second medium such as a wireless network.

Customer device 130 may include data storage 134 to store information in various electronic storage media. Electronic information, files, and documents may be stored in various ways, including, for example, a flat file, indexed file, hierarchical database, relational database, such as a database created and maintained with software from, for example, Oracle^{®} Corporation, a Microsoft^{®} SQL system, an Amazon cloud hosted database or any other query-able structured data storage mechanism.

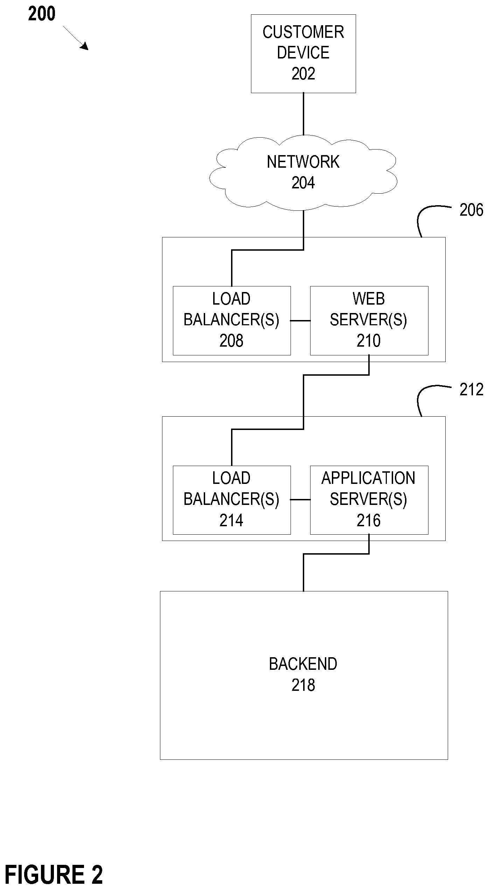

Referring to Figure 2, which depicts an example system 200 that may enable a system, such as a call center system 120, customer service center, authentication system, financial institution and/or the like, for example, to provide network services to its customers. As shown in Figure 2, system 200 may include a customer device 202, a network 204, a front-end controlled domain 206, a back-end controlled domain 212, and a backend 318. Front-end controlled domain 206 may include one or more load balancers 208 and one or more web servers 210. Back-end controlled domain 212 may include one or more load balancers 214 and one or more application servers 216.

Customer device 202 may be a network-enabled computer, similar to customer device 130. As referred to herein, a network-enabled computer may include, but is not limited to: e.g., any computer device, or communications device including, e.g., a server, a network appliance, a personal computer (PC), a workstation, a mobile device, a phone, a handheld PC, a personal digital assistant (PDA), a thin client, a fat client, an Internet browser, or other device. The one or more network-enabled computers of the example system 200 may execute one or more software applications to enable, for example, network communications.

Customer device 202 also may be a mobile device. For example, a mobile device may include an iPhone, iPod, iPad from Apple^{®} or any other mobile device running Apple's iOS operating system, any device running Google's Android^{®} operating system, including for example, Google's wearable device, Google Glass, any device running Microsoft's Windows^{®} Mobile operating system, and/or any other smartphone or like wearable mobile device.

Network 204 may be one or more of a wireless network, a wired network, or any combination of a wireless network and a wired network. For example, network 204 may include one or more of a fiber optics network, a passive optical network, a cable network, an Internet network, a satellite network, a wireless LAN, a Global System for Mobile Communication (GSM), a Personal Communication Service (PCS), a Personal Area Networks, (PAN), D-AMPS, Wi-Fi, Fixed Wireless Data, IEEE 802.11b, 802.15.1, 802.11n, and 802.11g or any other wired or wireless network for transmitting and receiving a data signal.

In addition, network 204 may include, without limitation, telephone lines, fiber optics, IEEE Ethernet 902.3, a wide area network (WAN), a local area network (LAN) or a global network such as the Internet. Also, network 204 may support an Internet network, a wireless communication network, a cellular network, or the like, or any combination thereof. Network 204 may include one network, or any number of example types of networks mentioned above, operating as a stand-alone network or in cooperation with each other. Network 204 may utilize one or more protocols of one or more network elements to which they are communicatively couples. Network 204 may translate to or from other protocols to one or more protocols of network devices. Although network 204 is depicted as a single network, it should be appreciated that according to one or more embodiments, network 204 may comprise a plurality of interconnected networks, such as, for example, the Internet, a service provider's network, a cable television network, corporate networks, and home networks.

Front-end controlled domain 206 may be implemented to provide security for backend 218. Load balancer(s) 208 may distribute workloads across multiple computing resources, such as, for example computers, a computer cluster, network links, central processing units or disk drives. In various embodiments, load balancer(s) 210 may distribute workloads across, for example, web server(s) 216 and/or backend 218 systems. Load balancing aims to optimize resource use, maximize throughput, minimize response time, and avoid overload of any one of the resources. Using multiple components with load balancing instead of a single component may increase reliability through redundancy. Load balancing is usually provided by dedicated software or hardware, such as a multilayer switch or a Domain Name System (DNS) server process.

Load balancer(s) 208 may include software that monitoring the port where external clients, such as, for example, customer device 202, connect to access various services of a call center, for example. Load balancer(s) 208 may forward requests to one of the application servers 216 and/or backend 218 servers, which may then reply to load balancer 208. This may allow load balancer(s) 208 to reply to customer device 202 without customer device 202 ever knowing about the internal separation of functions. It also may prevent customer devices from contacting backend servers directly, which may have security benefits by hiding the structure of the internal network and preventing attacks on backend 218 or unrelated services running on other ports, for example.

A variety of scheduling algorithms may be used by load balancer(s) 208 to determine which backend server to send a request to. Simple algorithms may include, for example, random choice or round robin. Load balancers 208 also may account for additional factors, such as a server's reported load, recent response times, up/down status (determined by a monitoring poll of some kind), number of active connections, geographic location, capabilities, or how much traffic it has recently been assigned.

Load balancers 208 may be implemented in hardware and/or software. Load balancer(s) 208 may implement numerous features, including, without limitation: asymmetric loading; Priority activation: SSL Offload and Acceleration; Distributed Denial of Service (DDoS) attack protection; HTTP compression; TCP offloading; TCP buffering; direct server return; health checking; HTTP caching; content filtering; HTTP security; priority queuing; rate shaping; content-aware switching; client authentication; programmatic traffic manipulation; firewall; intrusion prevention systems.

Web server(s) 210 may include hardware (e.g., one or more computers) and/or software (e.g., one or more applications) that deliver web content that can be accessed by, for example a client device (e.g., customer device 202) through a network (e.g., network 204), such as the Internet. In various examples, web servers, may deliver web pages, relating to, for example, online banking applications and the like, to clients (e.g., caller device 202). Web server(s) 210 may use, for example, a hypertext transfer protocol (HTTP or sHTTP) to communicate with customer device 202. The web pages delivered to client device may include, for example, HTML documents, which may include images, style sheets and scripts in addition to text content.

A user agent, such as, for example, a web browser, web crawler, or native mobile application, may initiate communication by making a request for a specific resource using HTTP and web server 210 may respond with the content of that resource or an error message if unable to do so. The resource may be, for example a file on stored on backend 218. Web server(s) 210 also may enable or facilitate receiving content from customer device 202 so customer device 202 may be able to, for example, submit web forms, including uploading of files.

Web server(s) also may support server-side scripting using, for example, Active Server Pages (ASP), PHP, or other scripting languages. Accordingly, the behavior of web server(s) 210 can be scripted in separate files, while the actual server software remains unchanged.

Load balancers 214 may be similar to load balancers 208 as described above.

Application server(s) 216 may include hardware and/or software that is dedicated to the efficient execution of procedures (e.g., programs, routines, scripts) for supporting its applied applications. Application server(s) 216 may comprise one or more application server frameworks, including, for example, Java application servers (e.g., Java platform, Enterprise Edition (Java EE), the .NET framework from Microsoft^{®}, PHP application servers, and the like). The various application server frameworks may contain a comprehensive service layer model. Also, application server(s) 216 may act as a set of components accessible to, for example, a call center, system supported by a call center, or other entity implementing system 200, through an API defined by the platform itself. For Web applications, these components may be performed in, for example, the same running environment as web server(s) 210, and application servers 216 may support the construction of dynamic pages. Application server(s) 216 also may implement services, such as, for example, clustering, fail-over, and load-balancing. In various embodiments, where application server(s) 216 are Java application servers, the web server(s) 216 may behaves like an extended virtual machine for running applications, transparently handling connections to databases associated with backend 218 on one side, and, connections to the Web client (e.g., customer device 202) on the other.

Backend 218 may include hardware and/or software that enables the backend services of, for example, a customer authentication system or other entity that maintains a distributed system similar to system 200. For example, backend 218 may include a system of customer authentication records, mobile applications, online platforms, and the like. In the example where a backend 218 is associated with a financial institution, backend 218 may include a system of record, online banking applications, a rewards platform, a payments platform, a lending platform, including the various services associated with, for example, auto and home lending platforms, a statement processing platform, one or more platforms that provide mobile services, one or more platforms that provide online services, a card provisioning platform, a general ledger system, and the like. Backend 218 may be associated with various databases, including account databases that maintain, for example, customer account data, customer privacy data, and or customer authentication data. Additional databases may maintain customer account information, product databases that maintain information about products and services available to customers, content databases that store content associated with, for example, a financial institution, and the like. Backend 218 also may be associated with one or more servers that enable the various services provided by system 200, including the digital authentication techniques described herein.

Figure 3 depicts a flowchart illustrating and example method 300 for digital authentication, according to an example embodiment. The method 300 illustrated in Figure 3 is described using an IVR system and customer call center and the customer interaction channel. One of ordinary skill in the art will understand that similar digital authentication techniques could be utilized in various other customer interaction channels referenced herein. The method 300 may begin at block 302. At block 304, a customer authentication system, such as an IVR system, may receive customer data from a network associated with an incoming call or website generated request. Customer data may include initial caller data such as a CLI from the network used by the customer to access the customer authentication system. Customer data may also include a DNIS, which may be used to initially route the call or request to a customer authentication device within the customer authentication system. The CLI and DNIS may be used to look up customer data associated with an authentication request from a customer device. For example, the customer authentication system may initiate a database inquiry using the CLI and DNIS to an account database to determine if a customer can be identified using the CLI and/or DNIS. In such an example, if the CLI and/or DNIS is associated with a data field associated with a particular customer, the database could return identification information about the customer and the customer data. A customer authentication system may, in response to received customer data from the network associated with an incoming call, generate and transmit scripted data using a VRU to a caller device, where the scripted data may request information from the customer via the customer device. For example, scripted data may include a request for enter a phone number, account number, or other data using a keypad and/or touchscreen associated with customer device. Scripted data may include a request for a customer to select whether the customer would like to proceed with digital call center authentication.

When a customer device receives a request for data from the customer authentication system (e.g., IVR system) system, a customer device may transmit a response to the customer authentication system (block 306). A response may include speech and/or input via a keypad or touchscreen. In this manner the customer authentication system may be able to recognize the response using speech recognition, DTMF and/or customer authentication response. At block 308, the customer authentication system may determine authentication data based on the customer data and/or customer input received in block 306. By way of example, an authentication code, such as a security token, may be generated. An authentication request may also be generated. An authentication code also may be generated by using a hash function, and the like. An authentication code may be generated by an authentication module to expire within a predetermined amount of time, such as one minute, thirty seconds, and the like. An authentication code may be generated based on geo-location data, such as a location associated with a customer device. For example, if a customer is calling from a first device and the customer authentication system determines that an authentication code should be transmitted to a second customer device based on data stored in data storage (or from a third party), the customer authentication system may determine a location of the first customer device and a location of the second customer device, for example when geo-location services are activated at the customer device(s). When the customer authentication system determines that the first customer device is not within a predetermined distance (500 feet, one mile, and the like) from the second customer device, the customer authentication system may determine that an authentication code cannot be generated.

At block 310, the authentication data may be transmitted to the customer device via a notification, such as an SMS message, an MMS message, an e-mail, a push notification, a voicemail message, and the like. In the same manner, an authentication code may be transmitted to the customer device via a notification, such as an SMS message, an MMS message, an e-mail, a push notification, a voicemail message, and the like. A notification may include data indicative of how to use the authentication code. For example, where an authentication code is transmitted in a push notification, the push notification may include a link to open a website, a mobile application, and/or an SMS message to input the authentication code. In the same manner, an SMS message, MMS message, e-mail, and the like may include a link to direct a customer to input the authentication code for transmission to the customer authentication system and/or customer authentication device. Authentication data may be generated without being included in a notification. For example, a customer authentication device may transmit audio data indicative of the authentication code and instructions to log into an application or website to input the authentication code. The type of notification and length of code may be determined based on the customer account data, customer privacy data, and/or customer authentication data.

At block 312, the customer authentication system may receive the authentication response based on the type of authentication request. For example, where the authentication request includes a notification to input the authentication code into a mobile application, the customer authentication system may receive a response through the mobile application platform indicative of a correct or incorrect authentication code associated with the customer. In such an example, the systems as shown and described in Figures 1 and 2 may be used to transmit the authentication code to a customer authentication system. This comparison may be made based on data stored in real-time in data storage associated with the customer authentication system. For example, the customer authentication system data storage may receive the authorization code via a mobile platform, which may then be transmitted to a customer authentication device in communication with customer. As another example, the customer authentication system data storage may receive a positive or negative response via a mobile application platform when a third party, such as the mobile application owner, determines whether the code is proper or not.

At block 314, in response to receiving an authentication response that matches the authentication request sent, customer data relating to the customer may be transmitted to the customer authentication device in order to assist the customer during the authentication session. At block 316, authenticated communication may begin between the customer authentication system and the customer. The method may end at block 318.

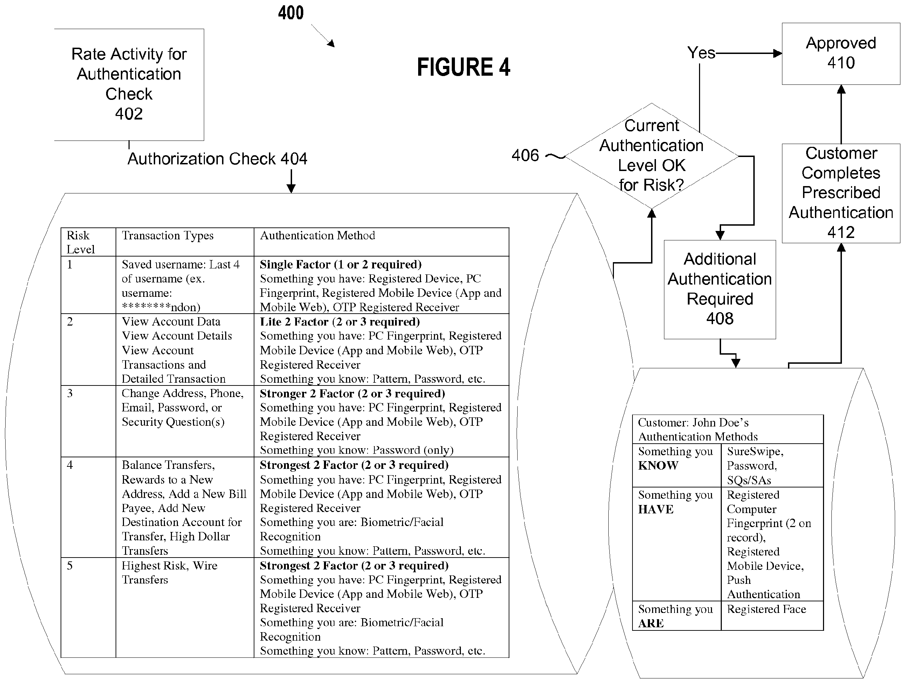

Figure 4 depicts a flowchart illustrating an example method for authenticating customers, according to an example embodiment of the disclosure.

At block 402, the rate activity for authentication check begins. At block 404, an authentication check includes determining a risk level associated with a transaction type. For example, a level one risk may include providing a saved username, including the last four characters of the username. A level two risk may include viewing account data, account details, account transactions, and detailed transactions of the customer. A level three risk may include a request to change address, phone number, e-mail address, password, and/or security question(s). A level four risk may include a request for a balance transfer, to change rewards to a new address, to add a new bill payee, to add a new destination account for transfer, or high dollar transfers. A level five risk is the highest risk, and may include a request for wire transfer(s).

The authentication methods associated with the various risk levels may include something you have (e.g. a registered device, a PC fingerprint, a registered mobile device, an OTP Registered Receiver, etc.), something you know (e.g. a pattern, a password, etc.), and something you are (e.g. biometric/facial recognition, etc.).

At block 406, the customer authentication system determines whether the current authentication level is OK for the risk associated with that level. If the customer authentication system determines that the current authentication level is sufficient with the risk associated with that level, the customer authentication data is approved in block 410. If the customer authentication system determines that the current authentication level is not sufficient for the risk associated with that level, then additional authentication is required in block 408.

At block 408, the customer authentication system may request additional authentication information such as something you have (e.g. a registered computer fingerprint, a registered mobile device, a push authentication, etc.), something you know (e.g. a SureSwipe password, SQs/SAs, etc.), or something you are (e.g. a registered face, etc.).

Upon requesting additional authorization information at block 408, the customer completes the prescribed authentication at block 412. If the customer sufficiently completes the prescribed authentication at block 412, the customer authentication data is approved at block 410.

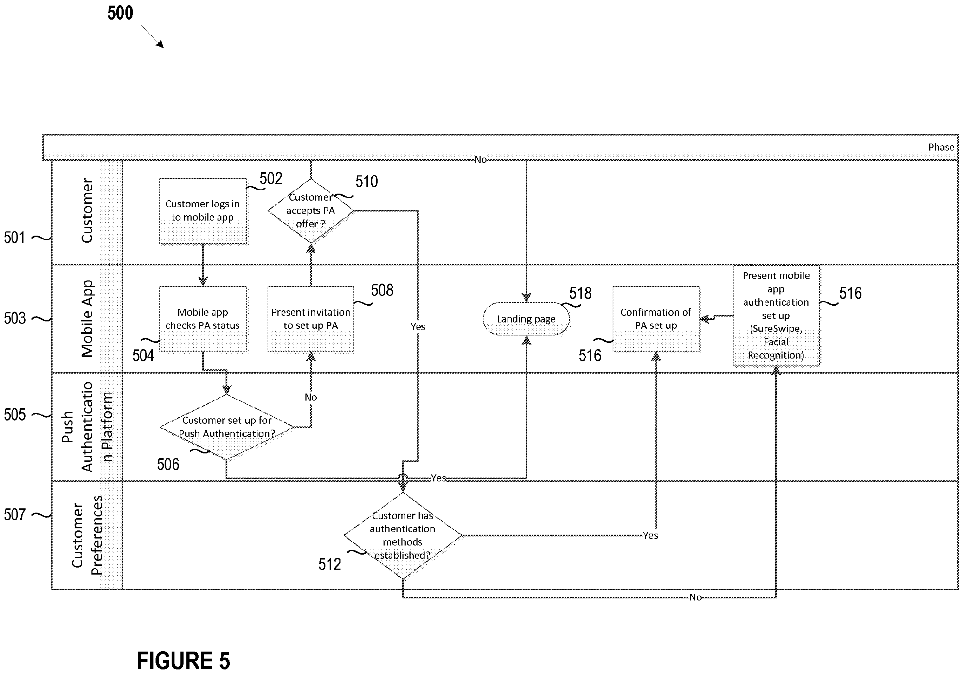

Figure 5 depicts a swim lane diagram illustrating and example method 500 for push authentication enrollment, according to an example embodiment of the disclosure. In various embodiments, a customer 501 may use a mobile device (e.g., customer device 130 and/or customer device 202) operating a mobile application 503 to enroll in push notification authentication. A push notification platform 505, which may be associated with a customer authentication system and/or backend server system may be used to enable digital authentication described herein. Also, the customer authentication system and/or backend server system may store customer preferences 507 to be used in push notification authentication.

In various embodiments, to enroll in push notification authentication, in block 502, a customer may log into a customer system using, for example, a mobile application associated with the customer system. Other applications and interfaces, e.g., a website of the customer system may be sued for customer login.

In block 504, the mobile application may check the status of push notification authentication for the customer. In various embodiments, a customer device, via the mobile application and other software and interfaces on the customer device, may establish a secure connection with a customer authentication system. Once a secure connection is established, the mobile application may query the push authentication platform to determine whether the customer is enrolled to receive push notification authentication.

In block 506, the push authentication platform will determine whether the customer is enrolled in push notification authentication. To do so, the push authentication platform may receive the database query, retrieve information from the database that is indicative of whether the customer is enrolled and respond to the database query accordingly. If the customer is enrolled, method 500 may proceed to block 518. If the customer is not enrolled, method 500 may proceed to block 508.

In block 508, the mobile application may invite the customer to set up push notification authentication. For example, the mobile application may present an invitation via the display on the mobile device. The invitation may ask the customer to touch the "YES" button if the customer wished to enroll in push notification authentication. This invitation also may include a "NO" button for the customer to touch if the customer does not wish to enroll in push notification authentication. The mobile application may determine which button the customer has pushed and respond accordingly.

In block 510, the customer decides whether to accept the invitation to enroll in push notification authentication. If the customer accepts the invitation to enroll in push notification authentication, method 500 may proceed to block 512. If the customer does not accept the invitation to enroll in push notification authentication, method 500 may proceed to block 518.

In block 512, it is determined whether the customer has authentication methods established. For example, the push authentication platform may query a database to determine whether an account for the customer has customer preferences stored relating to customer authentication methods. If the customer has authentication methods established, method 500 may proceed to block 516. If the customer does not have authentication methods established, method 500 may proceed to block 514.

In block 514, the mobile application may present the user with push authentication set up instructions. The mobile application may, for example, present various interfaces and/or screens on the display of the mobile device to allow the customer to, for example, set up pattern recognition and/or facial recognition to be used in push notification authentication.

Once the customer has set up push notification authentication using the mobile application, the mobile application may confirm the push notification set up in block 516.

In block 518, the mobile application may display a landing page to the customer via a display on the customer device. The landing page can provide any information to the customer regarding push notification authentication or otherwise. For example, the landing page can thank the customer for enrolling in push notification authentication and provide information about how push notification authentication operates.

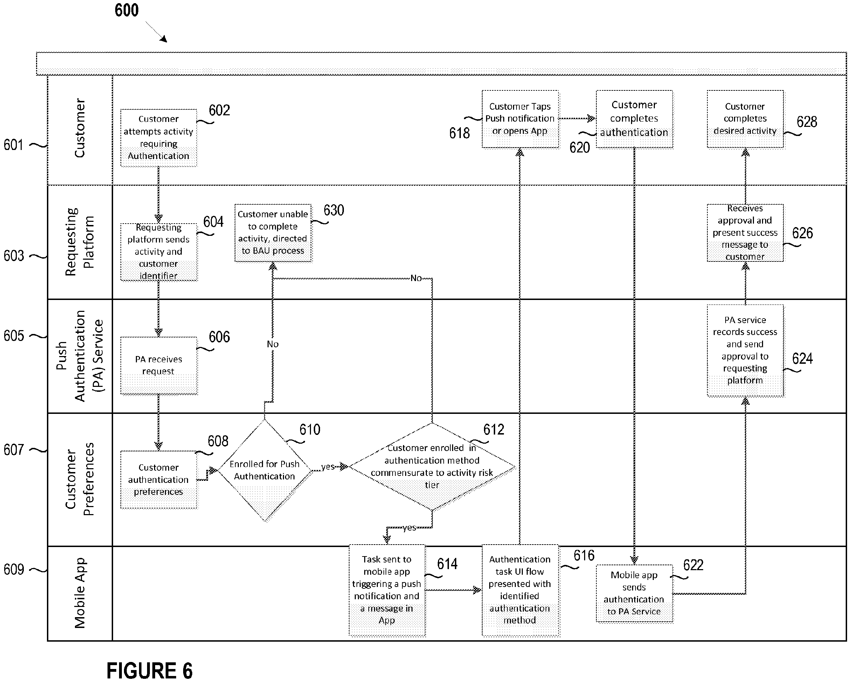

Figure 6 depicts a swim lane diagram illustrating an example method 600 for push authentication, according to an example embodiment of the disclosure. In various embodiments, a customer 601 may desire to perform a transaction within a particular channel. A requesting platform 605 associated with that channel may request to use push authentication to authorize the transaction. For example, a customer may call into a call center and wish to pay a credit card balance. A requesting platform associated with the call center channel may interact with a push authentication service 605 to authorize the customer to allow the customer to perform the balance transfer. The push authentication service 605 may rely on customer preferences 607 and interact with a mobile application 609 on a customer device to authenticate the customer using push notification authentication.

Method 600 may begin when a customer 601 attempts an activity requiring authentication in block 602. The example where a customer calls into a call center to pay a credit card balance is used to illustrate method 600. In various embodiments, other activities requiring authentication and other customer interaction channels may be used. For example, a customer may request a balance transfer using a mobile application channel and the like.

In block 604, a requesting platform 603 transmits the activity and customer identifier to a push authentication service 605. To do so, the requesting platform 603 may establish a secure connection with the push authentication service 605 to allow the requesting platform 603 to communicate securely with the push authentication service 605. In various embodiments, the requesting platform 603 may establish, for example, a secure socket layer (SSL) or similar secure connection with the push authentication service 605. Once the secure connection is established, the requesting platform 603 may transmit, for example, a data packet containing data indicative of the activity and the customer identifier to the push authentication service 605 via the secure connection.

In block 606, the push authentication service 605 receives the request form the requesting platform 603. For example, the push authentication service 605 may receive a data packet containing data indicative of the activity and the customer identifier via the secure connection at a communications interface.

In block 608, the push authentication service 605 may access customer preferences 607, for example, to begin the process of determining whether push authentication may be used to authenticate the transaction. In various embodiments, push authentication service 605 may be connected to a database that stores customer preferences 607. The push authentication service 607 may have a secure connection with the database that maintains customer preferences (e.g., a database associated with a backend financial institution system). The customer preferences 607 may indicate, for example, whether the customer 601 is enrolled in push authentication service, various push authentication methods for the customer, and other data related to push authentication for the customer.

In block 610, it may be determined whether customer 601 is enrolled for push authentication. In various embodiments, a database query may be initiated to a customer preferences 607 database to determine whether that data associated with customer 601 indicates whether customer 601 is enrolled in push authentication. If customer 601 is enrolled in push authentication, method 600 may proceed to block 612. If customer 601 is not enrolled in push authentication, method 600 may proceed to block 630.

In block 612, it may be determined whether a customer is enrolled in an authentication method commensurate to the activity risk tier. As noted above, an authentication framework may be provided to match the risk of a customer activity to the appropriate authentication. For example, if a customer wishes to perform an activity that does not require authentication, such as viewing information other than non-public personal information (NPI), the authentication framework can utilize no authentication. If a customer wishes to perform an activity, such as viewing low-risk NPI, the authentication framework can utilize no challenge authentication. If a customer wishes to perform an activity, such as viewing medium-risk NPI and/or conducting low risk transactions, the authentication framework can utilize password, pattern recognition, facial recognition and/or push notification authentication. In block 612, the push authentication service 607 may interact with a customer preferences 607 database to determine whether the customer 601 is enrolled for the authentication method required for the requested activity. If so, method 600 may proceed to block 614. If the customer is not enrolled for the requisite authentication method, method 600 may proceed to block 630.

In block 614, the mobile application 609 on the customer 601 device may receive a push notification from push authentication service 606, for example, which may result in an in-application message to the customer 601 that a certain activity is being attempted which requires authentication via the mobile application. For example, the customer 601 may receive a push notification via its mobile device, which when customer 601 interacts with the push notification, the mobile device interfaces the push notification with mobile application 609 to begin the authentication process.

In block 616, the authentication task user interface may be presented to customer 601 via the mobile application 609. In various embodiments, the customer may authenticate via three factor authentication, using the mobile device and mobile application to satisfy, for example, the know, have, and are requirements as described above.

In block 618, the customer 601 interacts with the push notification by, for example, tapping or touching on the push notification to open the mobile application 609. In various embodiments, an application programming interface and/or additional software executing on the mobile device may execute instructions to cause the mobile application 609 to open and begin the authentication process.

In block 620, customer 601 may complete the authentication using, for example mobile application 609. For example, customer 601 may perform tasks and/or provide information via the mobile device to satisfy three factor authentication requirements. Notably, the customer 601 may use the mobile device to prove the "have" requirement. The customer 601 also may use, for example, a camera on the mobile device to provide facial recognition characteristics to satisfy the "are" requirement. This information that may be used in the authentication process may be captured by mobile application 609 and transmitted via a secure connection for verification.

In block 622, mobile application 609 may transmit authentication information via a secure connection to push authentication service 605. For example, mobile application 609 may transmit one or more data packets containing the authentication information over a network via a secure connection. In various embodiments, the secured connections described herein may contemplate using various encryption techniques to secure the transmitted information.

In block 624, the push authentication service 605 may determine whether the authentication information can be verified. To do so, push authentication service 605 may compare the received authentication information to known authentication information to determine whether the received information matches the known information. If the authentication information is verified, the push authentication service 605 may transmit an approval to the requesting platform 603 to authenticate the requested activity. This approval may be transmitted from the push authentication service 605 to the requesting platform 603 via a network using a secure connection.

In block 626, the requesting platform 603 receives the approval and presents a success message to the customer 601.

In block 628, the customer is authorized to complete the requested/desired activity using, for example, the customer interaction channel.

In block 630, if a customer 601 is unable to use push authentication, the customer 601 may be directed to complete a different, respective business accountable unit authentication process.

In various embodiments, push notification authentication may be an out of bank authentication or authorization mechanism that may allow single sign on users to approve another transaction or action that is being performed in a different channel, for example. This out of bank authentication can trigger, for example, a simple "tap" approval providing for a second factor of authentication using the mobile device as a hardware token (e.g., something the user "has"). This may be used in combination with password/touchID/pattern recognition and/or facial recognition to complete three factor authentication by also providing something you know (e.g., a password or pattern) and/or something you are (e.g., biometrics, including touchID and/or facial recognition).

In various example embodiments, push authentication may be used to authenticate users and enable users to authenticate various transactions and/or tasks. For example, push authentication may be used to provide real-time protection to card users. Customers transacting in an unusual way may trigger a "hard lock" on their card and have their attempted transaction declined and their card locked for fraud, leaving them unable to transact with their card. When this happens, a customer may call into a call center to have their card unlocked, which is expensive and frustrating for the customer and account provider. The customer also can be left feeling embarrassed as they are unable to complete the purchase and this can be a very public experience. The customer also may transacting normally and be unaware that fraudulent activity has occurred. Using push authentication to provide real-time protection to card users, a customer may attempt to transact in such a way that a hard lock is placed on their card for suspected fraud. The customer then may be advised by the merchant that their card is declined. A card issuer using its servers, for example, may identify the user and their registered device. The customer then may receive instantaneous push authentication notification to their registered device advising them of the attempted transaction. The customer receives a slide up on, for example, an interface of a mobile device application, that prompts the customer to confirm that the attempted transaction is legitimate. The customer may then authenticate via the appropriate transaction level, using for example, various digital authentication techniques including without limitation, swipe, password/touchID/pattern recognition or facial recognition. The mobile application may then transmit the customers response - approve or deny - back to the card issuer server. The server then informs the card processor that the customer has authenticated and should be allowed to proceed. When the customer attempts the transaction again, the transaction no longer is blocked by a hard lock on the customer account for fraud.

In various example embodiments, push notification authentication may be used to control access to, a file, including, for example, a credit file. Consumers today have very little control over who accesses their credit. Indeed, consumers today can only request a change to their file after something has been reported. For example, consumers today must "lock" their credit file to avoid any new credit being opened in their identity. Stolen identity and fraudulent accounts can significantly hurt an individual's credit score and can seriously hurt their quality of life and ability to secure credit. In various examples, push notification authentication may be used when a customer actively seeks to open new credit. When that happens, a merchant may request access to the customer's credit file. The customer may receive a push notification authentication transaction via a financial institution backend system detailing the request by the merchant to access the customer's credit file. The customer may approve the request if the request is legitimate and the credit file may be provided to the merchant and a decision to issue credit may be made. The merchant then may provide credit arrangement details to a credit bureau, for example. The credit bureau then may confirm terms with customer via, for example a push notification authentication transaction. If that happens, a customer may receive further push notifications to approve new entry in credit file. When the customer approves the transaction, the response may be sent back to the credit bureau and to the merchant. Similar systems and methods may be used, for example, to control access to medical records.

In various example embodiments, the above-described method may be used to allow a customer to authorize access to a credit file, for example, during a loan application process, including, for example, an auto loan and/or mortgage application. When a customer is actively seeking a loan, a lender (e.g., a bank or other loan provider), may request access to the customer's credit file during the loan application process. The customer may receive a push notification authentication transaction via from a financial institution detailing the request of the auto loan provider to access the customer's credit file. The customer may approve the request if the request is legitimate using various approval techniques shown and described herein. Once approved, the credit file may be provided to the auto loan provider and a decision to issue credit may be made. The merchant may provide credit arrangement details to a credit bureau, and the credit bureau may confirm the terms with customer via, for example, further push notification authentication transactions. If that happens, the customer may receive a push authentication transaction from, for example the credit bureau, to approve a new entry in the customer credit file. The customer may approve the transaction and the response may be transmitted back to the credit bureau and to the auto loan provider.

In various example embodiments, push notification authentication may be used to allow individuals to control access to electronically file documents, including, for example, tax-related documents. Though this example describes the electronic filing of tax documents, other document filings are contemplated. Regarding tax filings, for example, fraudsters are interested in obtaining tax information to aid in their fraud efforts. Fraudsters may use other peoples' tax identification information to file taxes that defraud the government and allow fraudsters to collect the tax return. Filing taxes today requires a PIN. Since many taxpayers only file once per year, this PIN is either one that they reuse or one that they have to write down, both of which are insecure. According to various embodiments, once a taxpayer has electronically prepared his or her taxes, the taxpayer may request to submit and verify using push notification authentication. The taxpayer may receive a push notification authentication request on his or her smartphone and approve the request using the techniques shown and described herein. The taxpayer then may submit the forms having been authenticated by, for example, the tax filing system or tax service provider.

In various example embodiments, push notification authentication may allow an entity, such as a financial institution, to provide a service to allow third parties to securely identify themselves to customers of that entity. For example, individuals that work with the public such as government employees or other public service employees (e.g., law enforcement officers) and/or private company employees may need to identify themselves to members of the public. Today this is done with badges and other identification that can be easily faked. When t this type of identification is required, for example, when an employee approaches member of the public on an appointment, if the member of the public has previously enrolled in push notification authentication, the entity servers identify the user and their registered device. The customer may receive an instantaneous push notification to their registered device advising them of confirmed identity of the employee present in front of them along with, for example, a recent picture.

In various example embodiments, push notification authentication may allow a customer to request an automated clearinghouse (ACH) link. Customers who wish to link an ACH account today must provide additional authentication by answering security questions. This authentication technique has drawbacks because, for example, user information is often not secure or is known by fraudsters and it relies on additional knowledge based authentication rather than true 2 factor authentication. As a result, customers may experience anxiety in that they are not sure exactly what answer they supplied for questions when they set them up. Moreover, some questions aren't applicable to the consumer - i.e., "In what city were you married" doesn't apply to those who aren't married. Further regulation is mandating the replacement of security questions during customer authentication. According to the various embodiments, a customer navigates to a website or interact with a mobile application of a financial institution. The customer may request to link an ACH Account and then be navigated to a page that advises the customer that the financial institution will need more authentication and that a push notification authentication transaction is being sent to their registered device. The company servers may then identify the user's identification and their registered device. The company servers may sends= a push notification to the device executing the mobile application and device combination for the account. The customer may interact with the device when it receives a slide up advising them of what transaction is requiring additional approval. The customer may then authenticate itself via the appropriate transaction level, swipe, password/touchID/pattern recognition or facial recognition. The mobile application executing on the mobile device may then send the customers response - approve or deny - back to the company's server. The server of, for example, the financial institution then may inform the website or mobile application that the customer has authenticated and can proceed. The website, for example, may allow the customer to proceed to make an ACH link.

In various example embodiments, push notification authentication may be used to enable a customer to enroll in a mobile payment application such as, for example ApplePay or Android Pay. When, for example, a customer adds their financial card information to a mobile payments system, the request may be routed via, for example, the mobile payment provider to the card issuer or financial institution to enroll the card. The card issuer servers may identify the user's identification and their registered device. The card issuer servers may transmit a push notification to a related mobile application and device combination for the card account. The customer may receive a slide up on an interface of the mobile advising the customer of what transaction is requiring additional approval (e.g., that a card is being enrolled in a mobile payment system). The customer may authenticates via the appropriate transaction level, swipe, password/touchID/pattern recognition or facial recognition. The mobile application may transmit the customers response - approve or deny - back to the card issuer server. The card issuer server then may inform the mobile payments provider that the customer has authenticated and can proceed with enrollment. Once enrolled, the customer is permitted to use their card with the mobile payments system.

In various example embodiments, push notification authentication may be used to provide additional authentication to a customer attempting to withdraw money from an automated teller machine. For example, additional authentication may be used to permit a customer to withdraw an amount of money that exceeds a daily ATM limit. Allowing a customer who has authenticated with PIN and card to withdraw large amounts is inherently risky because a customer's account may have been compromised and a fraudster is attempting to cash out or friends or family may have gained access to the legitimate customers account and is attempting a fraud transaction. The lack of additional authentication can put the bank at risk of fraud. Conventional over the limit experience has drawbacks because limiting the amount that the legitimate user can withdraw can frustrate the real customer and/or limiting the amount that the legitimate user can withdraw can precipitate a delay in transfer as the customer needs to go into the bank branch. According to various embodiments, when a customer has entered their card at the ATM and provided the correct PIN, if a customer attempts to withdraw a large amount of money over their daily limit, the customer may be shown a page on the ATM that advises the customer that the bank needs further authentication and that a push notification authentication transaction is being sent to their registered device. The bank backend servers identify the user's identification and their registered device. The bank backend servers may transmit a push notification to the device mobile application and device combination for the account. The customer may then receive, for example, a slide up advising the customer that additional authentication is required for over the limit withdrawals. The customer may authenticate via the appropriate transaction level, swipe, password/touchID/pattern recognition or facial recognition and the mobile application may transmit a customer response - approve or deny - back to the bank backend server. The bank backend server then may transmit a notification to the ATM, via, for example, an ATM network, that the customer has authenticated and can proceed. The ATM then may allow the customer to withdraw additional funds. In various embodiments, a similar method may be used to allow a customer to withdraw money without a bank card. For example, push notification authentication may allow a customer to withdraw money from an ATM via a "cardless transaction" option on the ATM software.

In various example embodiments, push notification authentication may be used to securely allow a customer to approve a purchase where a card is not present (e.g., a "card not present" transaction). When shopping online, customers must enter account number, expiry date and security code to complete a purchase. This manner of providing payment information has drawbacks because this information may already be known to fraudsters and can be exploited and the merchant is now in possession of this information and the user's information could be exposed/vulnerable should the merchant be compromised by hackers. According to various embodiments, a customer makes a purchase online using their account number and expiry date only. The customer may request that the merchant authenticate using push notification authentication. The card issuer servers identify the user's identification and their registered device. The card issuer servers may transmit a push notification to the device mobiel applicaiton and device combination for the account. The customer may receive, for example, a slide up advising them of what transaction is requiring additional approval (i.e., a card not present transaction is being attempted). The customer then may authenticate via the appropriate transaction level, swipe, password/touchID/pattern recognition or facial recognition and the mobile application may transmit the customer's response - approve or deny - back to the card issuers server. The card issuer server then may inform the website that the customer has authenticated and the card not present transaction can proceed.

In various example embodiments, push notification authentication may be used for various online banking transactions/requests. For example, push notification authentication may be used to allow a customer to securely request a new credit card, securely request a cashier's check, securely request real-time credit line increases, securely update a bank PIN in real time, perform an online wire transfer, securely accept terms and conditions, and the like. In these embodiments, push notification authentication may be used to allow a user to approve the request via a mobile device, for example, as shown and described herein.

In various embodiments, push notification authentication may be used to authenticate a customer navigating to a website that requires authentication without using security questions. According to various embodiments, when a customer navigates to a website, the customer is risk assessed by, for example, the service provider and the service provider determines that more authentication is required. The customer may be navigated to a page that advises the customer that the service provider needs more authentication and that a push notification authentication transaction is being sent to the customer's registered device. The service provider servers identify the user's login and their registered device. The service provider servers then may transmit a push notification to the device mobile applicaiton and device combination for the account. The customer may receive, for example, a slide up advising them the website requires additional authentication. The customer authenticates via the appropriate transaction level, swipe, password/touchID/pattern recognition or facial recognition and the mobile application may transmit the customers response - approve or deny - back to the service provider server. The service provider server then may inform the website that the customer has authenticated and can proceed. The website then allows the customer to interact as usual. Similar systems and methods may be used to allow a user to interact with a website, for example, without having to provide a password. For example, push notification authentication may allow a user to login to a website without having to provide username and password credentials. In such an embodiment, the push notification may inform the user that a customer is attempting to login/navigate to a website that requires a password. If the customer that receives the push notification is that user, the customer may authenticate via the mobile device as shown and described herein.

In various example embodiments, push notification authentication may be used to securely notify a customer that a service provider (e.g., a financial institution) has initiated a phone call to a customer. Customers receiving a call from service provider can never be certain that they are indeed talking with the service provider and not a fraudster. In the case of financial institutions, for example, customers require some degree of confidence that they are indeed speaking to an agent of the financial institution before providing any personal identification information. Important information therefore may not be communicated due to lack of authentication and trust in the outbound call. According to various embodiments, when a service provider initiates a proactive call to a customer, the customer may request that the merchant authenticate using push notification. The service provider servers may then identify the user's login and the customer's registered device. The service provider servers may transmit a push notification to the device mobile application and device combination for the account. The customer may receive, for example, a slide up advising them of the reason for calling, who is calling, etc. The customer may authenticate via the appropriate transaction level, swipe, password/touchID/pattern recognition or facial recognition and the mobile application may transmit a response - approve or deny - back to the service provider server. The service provider then may proceed with the call.

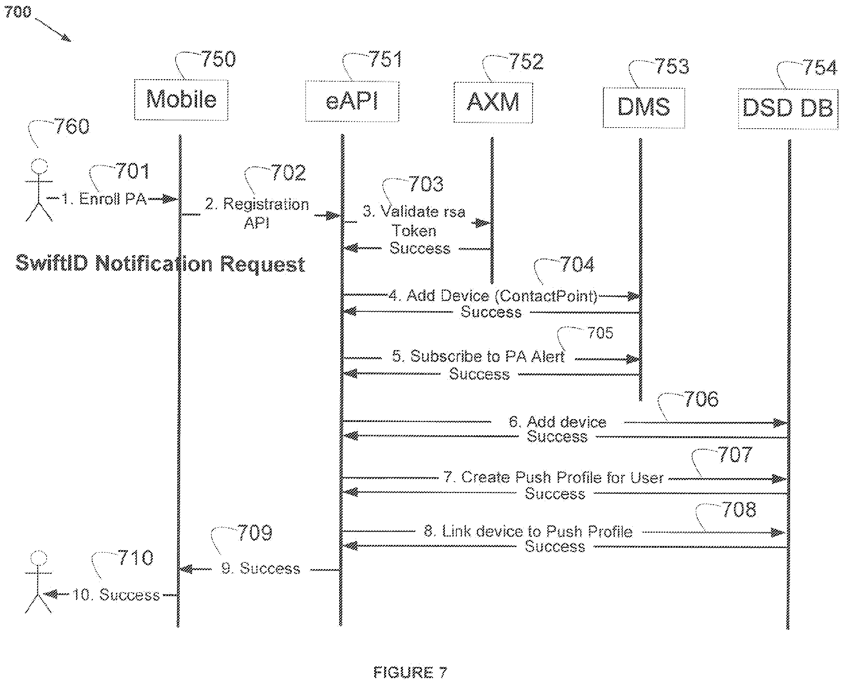

Figure 7 depicts an example embodiment of a system and method 700 for enrolling a device to receive push notification authentication. As shown in Figure 7, a system may include a user 760, a mobile device 750, an internal framework for hosting APIs (eAPI) 751, an access manager (AXM) 752, a database management system 753 and a digital security delivery database 754. In various embodiments the components of system 700 may be similar to the components shown and described in Figures 1 and 2. For example, mobile device 750 may be similar to customer device 130 and/or customer device 202. The an internal framework for hosting APIs (eAPI) 751, an access manager (AXM) 752, a database management system 753 and a digital security delivery database 754 may be components of, for example, a backend system (e.g., backend 218).

In various example embodiments, eAPI 751 may host one or more APIs that enable push notification authentication. For example, eAPI 751 may maintain is a set of routines, protocols, and/or tools that expresses a push notification authentication in terms of its operations, inputs, outputs, and underlying types. The APIs may define functionalities that are independent of their respective implementations, which may allow definitions and implementations to vary without compromising the interface.

eAPI 751 may include various APIs that relate to for example, push notification authentication registration, push notification authentication registration updates, push notification authentication inquire pending authorization tasks from a device, push notification authentication pull pending authorization tasks for a user, push notification authentication poll status of authorization task, push notification authentication create authorization task and send notification, push notification authentication approve/reject pending authorization task from a device, push notification authentication cancel pending authorization task, push notification authentication device inquiry, push notification authentication device add, push notification authentication device update, push notification authentication device delete, and the like.

In various embodiments, the APIs may be associated with a respective HTTP verb, The most-commonly-used HTTP verbs (or methods, as they are properly called), which may be implemented for push notification authentication, are POST, GET, PUT, and DELETE. These verbs correspond to create, read, update, and delete (or CRUD) operations, respectively, which also may be used. In various embodiments, the push notification authentication registration API may be associated with PUT, the push notification authentication registration updates API may be associated with POST, the push notification authentication inquire pending authorization tasks from a device API may be associated with GET, the push notification authentication pull pending authorization tasks for a user API may be associated with GET, the push notification authentication poll status of authorization task API may be associated with GET, the push notification authentication create authorization task and send notification API may be associated with POST, the push notification authentication approve/reject pending authorization task from a device API may be associated with POST, the push notification authentication cancel pending authorization task API may be associated with POST, the push notification authentication device inquiry API may be associated with GET, the push notification authentication device add API may be associated with POST, the push notification authentication device update API may be associated with PUT, and the push notification authentication device delete API may be associated with DELETE.

The POST verb may be utilized to **create** new resources within the various APIs described herein. In particular, POST may be used to create subordinate resources. That is, subordinate to some other (e.g. parent) resource. In other words, when creating a new resource, POST to the parent and the service takes care of associating the new resource with the parent, assigning an ID (new resource URI), etc. On successful creation, HTTP status 201, may be returned, returning a Location header with a link to the newly-created resource with the 201 HTTP status. POST is neither safe nor idempotent. It is therefore recommended for non-idempotent resource requests. Making two identical POST requests will most-likely result in two resources containing the same information.

The HTTP GET method may be used to "read" (or retrieve) a representation of a resource. In the "happy" (or non-error) path, GET returns a representation in XML or JSON and an HTTP response code of 200 (OK). In an error case, GET may return a 404 (NOT FOUND) or 400 (BAD REQUEST). Also, GET (along with HEAD) requests are used only to read data and not change it. Therefore, when used this way, they are considered safe. That is, they can be called without risk of data modification or corruption-calling it once has the same effect as calling it 10 times, or none at all. Additionally, GET (and HEAD) is idempotent, which means that making multiple identical requests ends up having the same result as a single request.

PUT may be utilized for **update** capabilities, PUT-ing to a known resource URI with the request body containing the newly-updated representation of the original resource. However, PUT can also be used to create a resource in the case where the resource ID is chosen by the client instead of by the server. In other words, if the PUT is to a URI that contains the value of a non-existent resource ID. A gain, the request body may contain a resource representation. On successful update, 200 (or 204 if not returning any content in the body) from a is returned from a PUT. If using PUT for create, HTTP status 201 may be used returned on successful creation. PUT is not a safe operation, in that it modifies (or creates) state on the server, but it is idempotent. In other words, if a resource is created or updated using PUT and then that same call is made again, the resource is still there and still has the same state as it did with the first call.

DELETE may be used to **delete** a resource identified by a URI. On successful deletion, HTTP status 200 (OK) may be returned along with a response body, perhaps the representation of the deleted item, or a wrapped response (see Return Values below). HTTP status 204 (NO CONTENT) also may be returned with no response body. In other words, a 204 status with no body, or the JSEND-style response and HTTP status 200 are the recommended responses to a DELETE.

In step 701, use 760 may use mobile device 750 to enroll in push notification authentication according to, for example, the enrollment methods described above. In various embodiments, user 760 may interact with a mobile application on mobile device 750 to enroll.

In step 702, mobile device 750 may utilize a registration API to interact with eAPI 751, which in turn, in step 703 will validate a token via access manager 752. If, in step 703, the token is validated, in step 704 eAPI 751 may interact with database management system 753 using, for example an add device API that enables hardware information about mobile device 750 to be maintained by the push notification authentication system. If the add device API returns success in step 704, eAPI 751 may interact with DMS 753 via a subscribe to push notification authentication alert API in step 705. If success is returned in step 705, eAPI 751 may interact with DSD DB 754 via an add device API to begin the process of adding the device to the digital security database ins step 706. If success is returned in step 706, eAPI 751 may interact with DSD DB 754 via a create user profile for push notification API in step 707 to store a push notification authentication profile in DSD DB 754. If success is returned in step 707, in step 708, eAPI 751 may interact with DSD DB 754 via an link device to push profile API to link the hardware characteristics of the device to the push notification authentication profile. If success is returned in step 708, success may be returned via the registration API in step 709, which in turn may return success in step 710, which may result in user 760 being enrolled in push notification authentication.

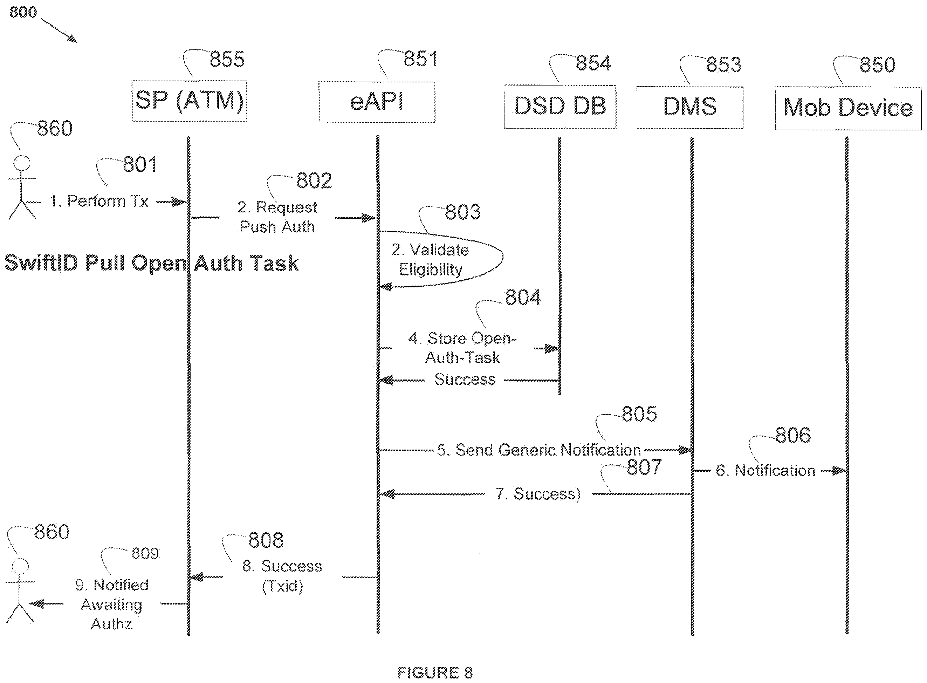

Figure 8 depicts an example system and method 800 that notifies a user 860 that a transaction is awaiting authentication and/or approval. The system depicted in Figure 8 may include user 860, eAPI 851, which may be similar to eAPI 751, DSD DB 854, which may be similar to DSD DB 854, DMS 853, which may be similar to DMS 753, mobile device 850, which may be similar to mobile device 750, and service provider system 855. In various example embodiments, a service provider may include any entity that enables customer transactions. For example, a service provider may be a financial institution, a website provider and the like. Service provider 855 may have associated computer systems.

In step 801, user 860 may request to perform a transaction while interacting with service provider 855 via a particular customer interaction channel. The requested may be similar to any of the various transaction types described herein.

In step 802, service provider 855 may interact with eAPI 851 to request push notification authentication. For example, service provider 855 may interact with eAPI 851 to notify a push notification authentication system that user 860 has requested to perform a particular transaction. In various embodiments, the service provider 855 and push notification system may be associated with the same entity and the push notification authentication may be an out of band authentication. Service provider 855 also may be a third party that is requesting push notification authentication.

In step 803, eAPI 851 may validate eligibility of the transaction to determine whether, for example, user 860 may be authenticated via push notification authentication.

If validated, in step 804, eAPI 851 may interact with DSD DB 854 to inform the push notification authentication system that a particular task required push notification authentication. If the task is successfully stored in step 804, in step 805, eAPI 851 may interact with DMS 853 to transmit a generic notification that a particular task requires push notification authentication.

In step 806, DMS 853 may interact with mobile device 850, to transmit the push notification to the mobile device in block 806. If the user approves the requested transaction/task, success is returned in block 807 via an interaction between DMS 853 and eAPI 851.

In block 808, eAPI 851 interacts with service provider 808 to indicate that a particular transaction is authorized based on push notification authentication. In various embodiments, the eAPI may use a transaction identification number, for example, to identify which transaction is authorized. In step 809, user 860 is informed that the transaction awaiting authorization is to proceed.

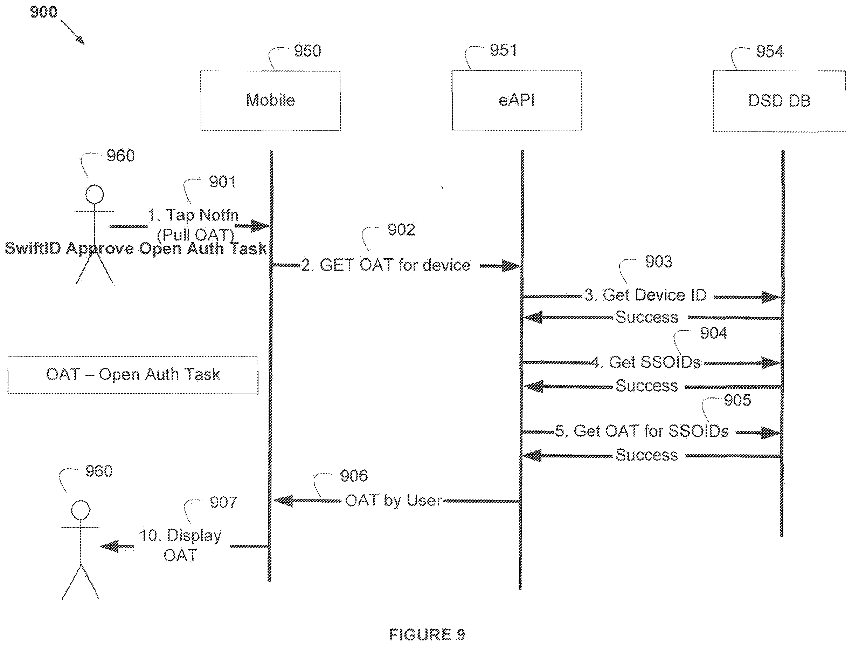

Figure 9 illustrates an example system and method 900 for approving a transaction using push notification authentication. The system in Figure 9 may include mobile device 950 which may be similar to mobile device 750, eAPI 951 which may be similar to eAPI 751, and DSD DB 954 which may be similar to DSD DB 754.

In step 901, upon receipt of a push notification, user 960 may interact with mobile device 950 to "tap" the push notification appearing on, for example, a user interface of mobile device 950, which may cause mobile device 950 to interact with eAPI 951 to GET the open authorization task for the mobile device 950 in step 902. In other words, in step 902, mobile device 950 may interact with eAPI 951 to retrieve the task associated with the push notification. This GET interaction may include information about the user and the hardware characteristics of mobile device 950 to enable a push notification authentication system to retrieve the task requiring authentication from DSD DB 954.

In step 903, eAPI 951 may interact with DSD DB to get the device identifier. The DSD DB may use information transmitted by the mobile device to determine the device identifier. If success is returned in step 903, in step 904, eAPI 951 may interact with DSD DB 954 using, for example, the device identifier, to GET the single sign on identifiers (SSOIDs) for the user 960. If success is returned in step 904, eAPI 951 may interact with DSD DB 954 using, for example, the SSOIDs to GET the open authorization task for the SSOIDs. If success is returned in step 905, eAPI 951 may interact with mobile device 950 to transmit the open authorization task to user 960.

In step 907, a mobile application on mobile device 900 that is associated with the push notification authentication may display the open authorization task to user 960 via a user interface on mobile device 950.

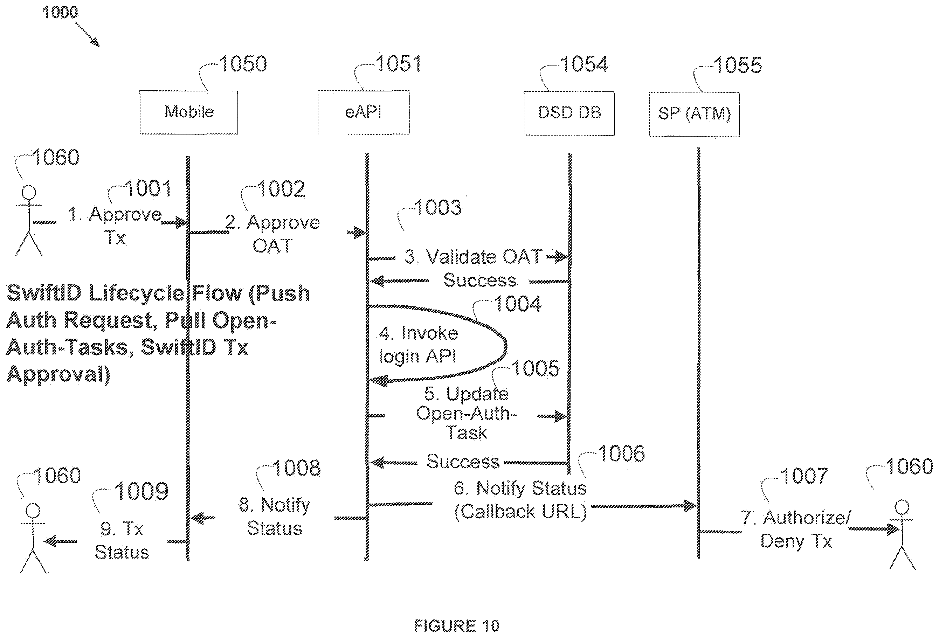

Figure 10 illustrates an example system and method 1000 for authorizing a transaction that was approved using push notification authentication. The system in Figure 10 may include mobile device 1050 which may be similar to mobile device 750, eAPI 1051 which may be similar to eAPI 751, DSD DB 1054 which may be similar to DSD DB 754, and service provider 1055, which may be similar to service provider 855.

In step 1001, a user 1060 may approve a transaction using push notification authentication using mobile device 1050. In step 1002, mobile device 1050 may interact with eAPI to provide approval information via an Approval API, for example. In step 1003, eAPI 1051 may interact with DSD DB 1054 to validate the task that required push notification authentication. If success is returned in step 1003, in step 1004 eAPI may invoke a login API. In step 1005, eAPI may interact with DSD DB 1054 to update DSD DB to indicate that the task has been authorized via push notification authentication. If success is returned in step 1005, in step 1006, eAPI 1051 may interact with service provider 1055 via, for example a call back URL to notify service provider 1055 that the task has been approved. In block 1007, service provider 1055 may notify user 1060 whether the transaction was approved or denied. In step 1008, eAPI 1051 may interact with mobile device 1050 to notify user 1060 whether the transaction was approved or denied. In step 1009, the mobile device may display the status of the transaction to the user 1060 via mobile device 1050.

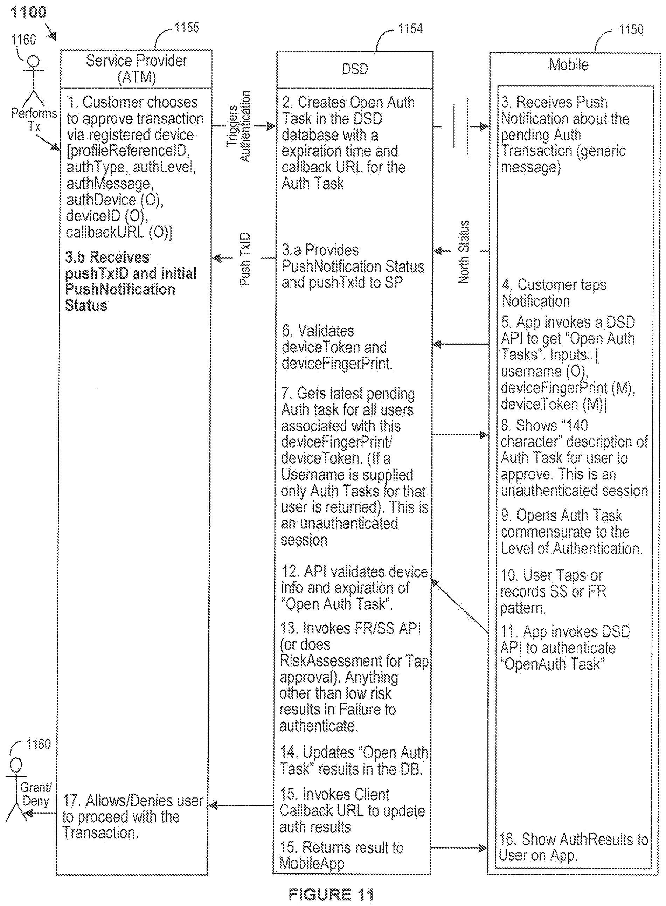

Figure 11 illustrates an example system and method 1100 for authorizing a transaction that was approved using push notification authentication. The system in Figure 11 may include mobile device 1150 which may be similar to mobile device 750, DSD DB 1154 which may be similar to DSD DB 754, and service provider 1155, which may be similar to service provider 855.

As shown in Figure 11, a user 1160 may perform a transaction by interacting with service provider 1155. In so doing, a customer pay choose to approve the transaction via a registered device (item 1). When the customer makes this choice, an authentication is triggered causing service provider 1155 to interact with DSD DB 1154. DSD DB creates an open authentication task in DSD DB 1154 with an expiration time and callback URL for the task (item 2). DSD DB 1154 then transmits a push notification to mobile device 1150 via, for example, a database management system. Mobile device 1150 receives the push notification that may include a generic message about a pending transaction requiring authentication (item 3). Mobile device 1150 transmits a notification status to DSD DB 1154, which in turn provides push notification status and a push notification transaction identifier to service provider 1055 (item 3a). Service provider 1155 receives the push notification status and a push notification transaction identifier (item 3b).

Upon receiving the push notification, the customer may tap on the notification via a mobile device interface, for example (item 4). A mobile application executing on mobile device 1150 may invoke a DSD API to get open authentication tasks (item 5) using for example, a username, device fingerprint and device token (e.g., device hardware characteristics. The DSD DB 1154 then validates the device token and device fingerprint (item 6). The DSD DB 1154 then interacts with the mobile device 1150 to get the latest pending authentication tasks for all users associated with this device fingerprint/device token (item 7) and transmits the task to mobile device 1150. The mobile device 1150 then displays a description of the authentication task requiring user approval (item 8). The mobile device then opens the authentication task commensurate with the level of authentication (item 9), the user performs the required authentication task (item 10) and a mobile application on mobile device 1150 invokes a DSD API to authenticate the open task (item 11).

The DSD API validates the device information and the expiration of the open authentication task (item 12). The DSD DB 1154 then invokes facial recognition and/or pattern recognition API or performs some other risk assessment to determine whether authentication has failed (item 13). The DSD DB 1154 then updates the open authentication tasks results in the DSD DB 1154 (item 14) and invokes a client callback URL to update authentication results to service provider (item 15). The DSD DB 1154 also returns the result to the mobile application on mobile device 1150 and mobile device 1150 displays the result (item 16). The service provider 1155 allows or denies the transaction based on the authentication result (item 17).

It is further noted that the systems and methods described herein may be tangibly embodied in one of more physical media, such as, but not limited to, a compact disc (CD), a digital versatile disc (DVD), a floppy disk, a hard drive, read only memory (ROM), random access memory (RAM), as well as other physical media capable of storing software, or combinations thereof. Moreover, the figures illustrate various components (e.g., servers, computers, processors, etc.) separately. The functions described as being performed at various components may be performed at other components, and the various components bay be combined or separated. Other modifications also may be made.

The present disclosure is not to be limited in terms of the particular embodiments described in this application, which are intended as illustrations of various aspects. Functionally equivalent methods and apparatuses within the scope of the disclosure, in addition to those enumerated herein, may be apparent from the foregoing representative descriptions. Such modifications and variations are intended to fall within the scope of the appended representative claims. The present disclosure is to be limited only by the terms of the appended representative claims.

It is also to be understood that the terminology used herein is for the purpose of describing particular embodiments only, and is not intended to be limiting.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It may be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It may be further understood by those within the art that if a specific number of an introduced claim recitation is intended, such an intent may be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, etc.). It may be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" may be understood to include the possibilities of "A" or "B" or "A and B."

The foregoing description, along with its associated embodiments, has been presented for purposes of illustration only. It is not exhaustive and does not limit the invention to the precise form disclosed. Those skilled in the art may appreciate from the foregoing description that modifications and variations are possible in light of the above teachings or may be acquired from practicing the disclosed embodiments. For example, the blocks described need not be performed in the same sequence discussed or with the same degree of separation. Likewise, various blocks may be omitted, repeated, or combined, as necessary, to achieve the same or similar objectives. Accordingly, the invention is not limited to the above-described embodiments, but instead is defined by the appended claims.

In the preceding specification, various preferred embodiments have been described with references to the accompanying drawings. It may, however, be evident that various modifications and changes may be made thereto, and additional embodiments may be implemented, without departing from the broader scope of the invention as set forth in the claims that follow. The specification and drawings are accordingly to be regarded as an illustrative rather than restrictive sense.

## Claims

1. Method comprising:
storing, in a digital security delivery database (754,854,954,1054,1154), information about a user (760,860,960,1060,1160) that is enrolled in push notification authentication, the information about the user (760, ... ) including hardware characteristics of a mobile device {130,202,750,850,950,1050,1150);
receiving (802), at an application programming interface (API) framework (751,851,951,1051) coupled to a communication interface (126) and to the digital security delivery database (754, ... ), a request from a service provider system (855,1055,1155) to create an authentication task for a transaction requiring push notification authentication;
transmitting (805), from the APIframework (751, ...) to a database management system (853), a generic notification that a particular authentication task requires push notification authentication;
transmitting (806), from the database management system (853), a push notification to the mobile device (130, ...);
receiving (902), at the APIframework (751, ...) a request from the mobile device (130, ...) to retrieve the authentication task associated with the push notification, the request including the information about the user and the hardware characteristics of the mobile device (130, ...);
transmitting (906), from the API framework (751, ...), after validating the received hardware characteristics of the mobile device, the authentication task to the mobile device (130, ...);
receiving (1002), at the API framework (751, ...) from the mobile device (130, ...), information indicating that the transaction requiring push notification authentication has been approved by the user (760, ...) of the mobile device (130, ...);
updating (1005), by the API framework (751, ...), the digital security delivery database (754, ...) to indicate that the transaction requiring push notification authentication has been approved by the user (760, ...); and
notifying (1006), by the API framework (751, ...), the service provider system that the transaction requiring push notification authentication has been approved.

2. Method of claim 1, wherein the transaction requiring push notification authentication is approved using pattern recognition based on a pattern inputted into the mobile device (130, ...) by the user (760, ...

3. Method of claim 1 or 2, further comprising:
interacting, via the API framework (751, ...), with the digital security delivery database (754, ...) using the hardware characteristics of the mobile device (130, ...) to identify the transaction requiring push notification authentication; and
transmitting information about the transaction requiring push notification authentication to the mobile device (130, ...).

4. Method of claim 1 or 2, wherein information about the user (760, ...) further includes login information for the user (760, ...) provided by the user (760, ...) to the mobile device (130, ...).

5. Method of claim 4, further comprising:
interacting, via the API framework (751, ...), with the digital security delivery database (754, ...) using the hardware characteristics of the mobile device (130, ...) and the login information for the user (760, ...) to identify the transaction requiring push notification authentication; and
transmitting information about the transaction requiring push notification authentication to the mobile device (130, ...).

6. Method of any one of claims 1 to 5, where the transaction requiring push notification authentication is configured to be performed at an automated teller machine (ATM, 855, ...) that is connected to a communication interface (126) via an automated teller machine network, the communication interface (126) being configured to communicate with the mobile device (130, ...) via a network (110, 204).

7. Method of claim 6, where the transaction requiring push notification authentication is a cardless automated teller machine transaction.

8. Method of any one of claims 1 to 5, where the transaction requiring push notification authentication relates to a loan application or to accessing a file or replaces responses to security questions when accessing a website.

9. Method of any one of claims 1 to 5, where the transaction requiring push notification authentication replaces logging into a website with a username and a password.

10. Method of any one of claims 1 to 9, where the hardware characteristics of the mobile device (130, ...) include a device fingerprint.

11. Method of any one of claims 1 to 10, where the communication interface (126), digital security delivery database (754, ...) and the API framework (751, ...) are components of a financial institution backend system (218, 318).

12. Method of claim 11, further comprising:
connecting to the mobile device (130, ...) via the communication interface (126) in communication with the digital security delivery database (754, ...) and the API framework (751, ...), wherein a mobile application (503, 609) operating on the mobile device (130, ...) securely connects the mobile device (130, ...) to the financial institution backend system (218, ...) via the communication interface (126).

13. Method of any one of claims 1 to 12, further comprising:
connecting to the mobile device (130, ...) via the communication interface (126) in communication with the digital security delivery database (754, ...) and the API framework (751, ...), wherein
the authentication task is transmitted (906) to the mobile device (130, ...) via the communication interface (126).

14. Method of claim 1 or 13, wherein the communication interface (126) receives a response to the push notification.

15. Method of claim 13, wherein the communication interface (126) communicates with the mobile device (130, ...) via a wireless network (110, 204), preferably the wireless network (110, 204) is a Bluetooth wireless network.

## Patentansprüche

1. Verfahren, umfassend:
Speichern, in einer digitalen Sicherheitslieferungsdatenbank (754, 854, 954, 1054, 1154), von Informationen über einen Benutzer (760, 860, 960, 1060, 1160), der in der Push-Benachrichtigungsauthentifizierung angemeldet ist, wobei die Informationen über den Benutzer (760, ...) Hardwareeigenschaften einer mobilen Vorrichtung (130, 202, 750, 850, 950, 1050, 1150) beinhalten;
Empfangen (802), an einem Anwendungsprogrammierschnittstellen-(API-)Rahmen (751, 851, 951, 1051), der mit einer Kommunikationsschnittstelle (126) und mit der digitalen Sicherheitslieferungsdatenbank (754, ...) gekoppelt ist, einer Anforderung von einem Dienstanbietersystem (855, 1055, 1155), eine Authentifizierungsaufgabe für eine Transaktion zu erzeugen, die eine Push-Benachrichtigungsauthentifizierung erfordert;
Übertragen (805), von dem API-Rahmen (751, ... ) an ein Datenbankverwaltungssystem (853), einer allgemeinen Benachrichtigung, dass eine bestimmte Authentifizierungsaufgabe eine Push-Benachrichtigungsauthentifizierung erfordert;
Übertragen (806), von dem Datenbankverwaltungssystem (853), einer Push-Benachrichtigung an die mobile Vorrichtung (130, ... );
Empfangen (902), an dem API-Rahmen (751, ... ), einer Anforderung von der mobilen Vorrichtung (130, ... ), um die Authentifizierungsaufgabe abzurufen, die der Push-Benachrichtigung zugeordnet ist, wobei die Anforderung die Informationen über den Benutzer und die Hardwareeigenschaften der mobilen Vorrichtung (130, ... ) beinhaltet;
Übertragen (906), von dem API-Rahmen (751, ... ), nach dem Bestätigen der empfangenen Hardwareeigenschaften der mobilen Vorrichtung, der Authentifizierungsaufgabe an die mobile Vorrichtung (130, ... );
Empfangen (1002), an dem API-Rahmen (751, ... ) von der mobilen Vorrichtung (130, ... ), von Informationen, die anzeigen, dass die Transaktion, die eine Push-Benachrichtigungsauthentifizierung erfordert, von dem Benutzer (760, ... ) der mobilen Vorrichtung (130, ... ) freigegeben wurde;
Aktualisieren (1005), durch den API-Rahmen (751, ... ), der digitalen Sicherheitslieferungsdatenbank (754, ... ), um anzuzeigen, dass die Transaktion, die eine Push-Benachrichtigungsauthentifizierung erfordert, von dem Benutzer freigegeben wurde (760, ... ); und
Benachrichtigen (1006), durch den API-Rahmen (751, ... ), des Dienstanbietersystem, dass die Transaktion, die eine Push-Benachrichtigungsauthentifizierung erfordert, freigegeben wurde.

2. Verfahren nach Anspruch 1, wobei die Transaktion, die eine Push-Benachrichtigungsauthentifizierung erfordert, unter Verwendung einer Mustererkennung anhand eines Musters, das von dem Benutzer (760, ... ) in die mobile Vorrichtung (130, ... ) eingegeben wurde, freigegeben wird.

3. Verfahren nach Anspruch 1 oder 2, ferner umfassend:
Interagieren, über den API-Rahmen (751, ... ), mit der digitalen Sicherheitslieferungsdatenbank (754, ... ) unter Verwendung der Hardwareeigenschaften der mobilen Vorrichtung (130, ... ), um die Transaktion zu identifizieren, die eine Push-Benachrichtigungsauthentifizierung erfordert; und
Übertragen von Informationen über die Transaktion, die eine Push-Benachrichtigungsauthentifizierung an die mobile Vorrichtung (130, ... ) erfordert.

4. Verfahren nach Anspruch 1 oder 2, wobei die Informationen über den Benutzer (760, ... ) ferner Anmeldeinformationen für den Benutzer (760, ... ) beinhalten, die von dem Benutzer (760, ... ) der mobilen Vorrichtung (130, ... ) bereitstellt werden.

5. Verfahren nach Anspruch 4, ferner umfassend:
Interagieren, über den API-Rahmen (751, ... ), mit der digitalen Sicherheitslieferungsdatenbank (754, ... ) unter Verwendung der Hardwareeigenschaften der mobilen Vorrichtung (130, ... ) und der Anmeldeinformationen für den Benutzer (760, ... ), um die Transaktion zu identifizieren, die eine Push-Benachrichtigungsauthentifizierung erfordert; und
Übertragen von Informationen über die Transaktion, die eine Push-Benachrichtigungsauthentifizierung an die mobile Vorrichtung (130, ... ) erfordert.

6. Verfahren nach einem der Ansprüche 1 bis 5, wobei die Transaktion, die eine Push-Benachrichtigungsauthentifizierung erfordert, so konfiguriert ist, dass sie an einem Geldautomaten (ATM, 855, ...) durchgeführt wird, der über ein Geldautomatennetzwerk mit einer Kommunikationsschnittstelle (126) verbunden ist, wobei die Kommunikationsschnittstelle (126) so konfiguriert ist, dass sie über ein Netzwerk (110, 204) mit der mobilen Vorrichtung (130, ...) kommuniziert.

7. Verfahren nach Anspruch 6, wobei die Transaktion, die eine Push-Benachrichtigungsauthentifizierung erfordert, eine kartenlose Geldautomatentransaktion ist.

8. Verfahren nach einem der Ansprüche 1 bis 5, wobei die Transaktion, die eine Push-Benachrichtigungsauthentifizierung erfordert, sich auf einen Kreditantrag oder das Zugreifen auf eine Datei bezieht oder Reaktionen auf Sicherheitsfragen beim Zugreifen auf eine Website ersetzt.

9. Verfahren nach einem der Ansprüche 1 bis 5, wobei die Transaktion, die eine Push-Benachrichtigungsauthentifizierung erfordert, das Einloggen auf einer Website mit einem Benutzernamen und einem Passwort ersetzt.

10. Verfahren nach einem der Ansprüche 1 bis 9, wobei die Hardwareeigenschaften der mobilen Vorrichtung (130, ... ) einen Geräte-Fingerabdruck beinhalten.

11. Verfahren nach einem der Ansprüche 1 bis 10, wobei die Kommunikationsschnittstelle (126), die digitale Sicherheitslieferungsdatenbank (754, ... ) und den API-Rahmen (751, ... ) Komponenten eines Backend-Systems (218, 318) eines Finanzinstituts sind.

12. Verfahren nach Anspruch 11, ferner umfassend:
Verbinden mit der mobilen Vorrichtung (130, ... ) über die Kommunikationsschnittstelle (126) in Kommunikation mit der digitalen Sicherheitslieferungsdatenbank (754, ... ) und dem API-Rahmen (751, ... ), wobei eine mobile Anwendung (503, 609), die auf der mobilen Vorrichtung (130, ... ) betrieben wird, die mobile Vorrichtung (130, ... ) über die Kommunikationsschnittstelle (126) sicher mit dem Backend-System (218, ... ) des Finanzinstituts verbindet.

13. Verfahren nach einem der Ansprüche 1 bis 12, ferner umfassend:
Verbinden mit der mobilen Vorrichtung (130, ... ) über die Kommunikationsschnittstelle (126) in Kommunikation mit der digitalen Sicherheitslieferungsdatenbank (754, ... ) und dem API-Rahmen (751, ... ), wobei
die Authentifizierungsaufgabe über die Kommunikationsschnittstelle (126) an die mobile Vorrichtung (130, ... ) übertragen wird (906).

14. Verfahren nach Anspruch 1 oder 13, wobei die Kommunikationsschnittstelle (126) eine Reaktion auf die Push-Benachrichtigung empfängt.

15. Verfahren nach Anspruch 13, wobei die Kommunikationsschnittstelle (126) mit der mobilen Vorrichtung (130, ... ) über ein drahtloses Netzwerk (110, 204) kommuniziert, wobei das drahtlose Netzwerk (110, 204) vorzugsweise ein Bluetooth-Funknetzwerk ist.

## Revendications

1. Procédé comprenant :
le stockage, dans une base de données de distribution à sécurité numérique (754, 854, 954, 1054, 1154), d'informations concernant un utilisateur (760, 860, 960, 1060, 1160) qui est inscrit dans une authentification de notifications poussées, les informations concernant l'utilisateur (760, ...) comportant des caractéristiques matérielles d'un appareil mobile (130, 202, 750, 850, 950, 1050, 1150) ;
la réception (802), au niveau d'un cadre d'interface de programmation d'applications (API) (751, 851, 951, 1051) couplé à une interface de communication (126) et à la base de données de distribution à sécurité numérique (754, ...), d'une requête émanant d'un système fournisseur de service (855, 1055, 1155) demandant de créer une tâche d'authentification pour une transaction requérant une authentification de notification poussée ;
la transmission (805), du cadre d'API (751, ...) à un système (853) de gestion de base de données, d'une notification générique indiquant qu'une tâche d'authentification particulière requiert une authentification de notification poussée ;
la transmission (806), à partir du système (853) de gestion de base de données, d'une notification poussée à l'appareil mobile (130, ...) ;
la réception (902), au niveau du cadre d'API (751, ...), d'une requête émanant de l'appareil mobile (130, ...) demandant de récupérer la tâche d'authentification associée à la notification poussée, la requête comprenant les informations concernant l'utilisateur et les caractéristiques matérielles de l'appareil mobile (130, ...) ;
la transmission (906), à partir du cadre d'API (751, ...), après validation des caractéristiques matérielles reçues de l'appareil mobile, de la tâche d'authentification à l'appareil mobile (130, ...) ;
la réception (1002), au niveau du cadre d'API (751, ...) à partir de l'appareil mobile (130, ...), d'informations indiquant que la transaction requérant une authentification de notification de poussée a été approuvée par l'utilisateur (760, ...) de l'appareil mobile (130, ...) ;
la mise à jour (1005), par le cadre d'API (751, ...), de la base de données de distribution à sécurité numérique (754, ...), afin d'indiquer que la transaction requérant une authentification de notification de poussée a été approuvée par l'utilisateur (760, ...) ; et
la notification (1006), par le cadre d'API (751, ...), au système fournisseur de service que la transaction requérant une authentification de notification de poussée a été approuvée.

2. Le procédé de la revendication 1, dans lequel la transaction requérant une authentification de notification de poussée est approuvée à l'aide d'une reconnaissance des formes sur la base d'une forme saisie dans l'appareil mobile (130, ...) par l'utilisateur (760, ...).

3. Le procédé des revendications 1 ou 2, comprenant en outre :
l'interaction, par l'intermédiaire du cadre d'API (751, ...), avec la base de données de distribution à sécurité numérique (754, ...) à l'aide des caractéristiques matérielles de l'appareil mobile (130, ...), afin d'identifier la transaction requérant une authentification de notification de poussée ; et
la transmission d'informations concernant la transaction requérant une authentification de notification de poussée à l'appareil mobile (130, ...).

4. Le procédé des revendications 1 ou 2, dans lequel les informations concernant l'utilisateur (760, ...) comportent en outre des informations d'ouverture de session pour l'utilisateur (760, ...), fournies par l'utilisateur (760, ...) à l'appareil mobile (130, ...).

5. Le procédé de la revendication 4, comprenant en outre :
l'interaction, par l'intermédiaire du cadre d'API (751, ...), avec la base de données de distribution à sécurité numérique (754, ...) à l'aide des caractéristiques matérielles de l'appareil mobile (130, ...) et des informations d'ouverture de session pour l'utilisateur (760, ...), afin d'identifier la transaction requérant une authentification de notification de poussée ; et
la transmission d'informations concernant la transaction requérant une authentification de notification de poussée à l'appareil mobile (130, ...).

6. Le procédé de l'une quelconque des revendications 1 à 5, dans lequel la transaction requérant une authentification de notification de poussée est conçue pour être effectuée au niveau d'un guichet automatique bancaire (GAB, 855, ...) qui est connecté à une interface de communication (126) par l'intermédiaire d'un réseau de guichets automatiques bancaires, l'interface de communication (126) étant conçue pour se mettre en communication avec l'appareil mobile (130, ...) par l'intermédiaire d'un réseau (110, 204).

7. Le procédé de la revendication 6, dans lequel la transaction requérant une authentification de notification de poussée est une transaction sur un guichet automatique bancaire sans carte.

8. Le procédé de l'une quelconque des revendications 1 à 5, dans lequel la transaction requérant une authentification de notification de poussée se rapporte à une demande de crédit ou à l'accès à un dossier ou remplace les réponses à des questions de sécurité lors de l'accès à un site internet.

9. Le procédé de l'une quelconque des revendications 1 à 5, dans lequel la transaction requérant une authentification de notification de poussée remplace l'ouverture de session sur un site internet à l'aide d'un identifiant et d'un mot de passe.

10. Le procédé de l'une quelconque des revendications 1 à 9, dans lequel les caractéristiques matérielles de l'appareil mobile (130, ...) comprennent une empreinte numérique de l'appareil.

11. Le procédé de l'une quelconque des revendications 1 à 10, dans lequel l'interface de communication (126), la base de données de distribution à sécurité numérique (754, ...) et le cadre d'API (751, ...) sont des composants d'un système dorsal (218, 318) d'une institution financière.

12. Le procédé de la revendication 11, comprenant en outre :
la connexion à l'appareil mobile (130, ...) par l'intermédiaire de l'interface de communication (126) en communication avec la base de données de distribution à sécurité numérique (754, ...) et le cadre d'API (751, ...), dans laquelle une application mobile (503, 609) en fonctionnement sur l'appareil mobile (130, ...) connecte en sécurité l'appareil mobile (130, ...) au système dorsal (218, ...) de l'institution financière par l'intermédiaire de l'interface de communication (126).

13. Le procédé de l'une quelconque des revendications 1 à 12, comprenant en outre ;
la connexion à l'appareil mobile (130, ...) par l'intermédiaire de l'interface de communication (126) en communication avec la base de données de distribution à sécurité numérique (754, ...) et le cadre d'API (751, ...), dans laquelle
la tâche d'authentification est transmise (906) à l'appareil mobile (130, ...) par l'intermédiaire de l'interface de communication (126).

14. Le procédé des revendications 1 ou 13, dans lequel l'interface de communication (126) reçoit une réponse à la notification de poussée.

15. Le procédé de la revendication 13, dans lequel l'interface de communication (126) se met en communication avec l'appareil mobile (130, ...) par l'intermédiaire d'un réseau sans fil (110, 204), le réseau sans fil (110, 204) étant de préférence un réseau sans fil Bluetooth.
